# EUROPÄISCHE PATENTSCHRIFT

(11) **EP 3 512 727 B1**
(45) Veröffentlichungstag und Bekanntmachung des Hinweises auf die Patenterteilung: **06.09.2023**
(21) Anmeldenummer: 17754088.7
(22) Anmeldetag: 27.07.2017
(51) Int. Cl.: B60K 1/00, B60K 15/05

(54) **TANKMODUL**
TANK MODULE
MODULE DE RÉSERVOIR

(30) Priorität: 14.09.2016 DE 102016117319; 03.03.2017 DE 102017104514
(43) Veröffentlichungstag der Anmeldung: 24.07.2019
(73) Patentinhaber: HUF Hülsbeck & Fürst GmbH & Co. KG, 42551 Velbert (DE)
(72) Erfinder: WITTE, Martin, 48683 Ahaus (DE); GORENZWEIG, Igor Alexander, 42109 Wuppertal (DE); LÖPKE, Christian, 42579 Heiligenhaus (DE)
(74) Vertreter: Bals & Vogel Patentanwälte PartGmbB
(86) Internationale Anmeldenummer: PCT/EP2017/069030
(87) Internationale Veröffentlichungsnummer: WO 2018/050340

(56) Entgegenhaltungen:
- DE-A1- 10 050 558
- DE-A1-102006 036 456
- DE-A1-102012 021 518
- US-A1- 2015 151 645
- US-A1- 2015 375 630
- US-B1- 6 968 874

## Beschreibung

Die Erfindung betrifft ein Tankmodul für ein Kraftfahrzeug, insbesondere ein elektrisches Kraftfahrzeug, welches mit einem Gehäuse, in welchem eine Aufnahme vorgesehen ist, wobei in der Aufnahme ein Anschlusselement, insbesondere eine Ladesteckdose, angeordnet ist, einem Schutzelement für das Anschlusselement, welches zwischen zumindest zwei Stellungen bewegbar ist, nämlich: einer Ruhestellung, in welcher die Aufnahme durch das Schutzelement verschließbar ist, und einer Betriebsstellung, in welcher die Aufnahme durch das Schutzelement freigebbar ist, sodass das Anschlusselement freigelegt ist, wobei das Schutzelement eine Außenfläche aufweist, und mindestens einem Sensor zum Erfassen einer Aktivierungshandlung eines Benutzers ausgeführt ist, um das Schutzelement zwischen der Ruhestellung und der Betriebsstellung zu überführen. Ferner betrifft die Erfindung ein System mit einem entsprechenden Tankmodul und einem mobilen Bauteil, bspw. einem Ladestecker und/oder einem ID-Geber. Weiterhin betrifft die Erfindung ein Verfahren zum Betätigen eines entsprechenden Tankmoduls.

Tankmodule für ein Kraftfahrzeug des Stands der Technik sind bspw. aus der DE 10 2015 102 839 A und der DE 10 2006 036456 A1 bekannt. Dabei weist das Tankmodul eine Ladeklappe auf, die ein Anschlusselement für einen Ladestecker verdeckt. Die Ladeklappe wird seitlich aufgeklappt, um das Anschlusselement für einen Ladevorgang freizugeben. In dieser aufgeklappten Stellung steht die Ladeklappe aus der Ebene einer Fahrzeugaußenhaut heraus. Die herausstehende Ladeklappe ist jedoch nicht vandalismussicher. Insbesondere bei Ladevorgängen für elektrische Kraftfahrzeuge, die länger andauern als ein gewöhnlicher Tankvorgang bei kraftstoffbetriebenen Kraftfahrzeugen, stellt dies ein Sicherheitsrisiko dar.

Es ist daher Aufgabe der vorliegenden Erfindung, ein Tankmodul der vorstehend genannten Art zu verbessern. Insbesondere ist es Aufgabe der vorliegenden Erfindung, ein sicheres Tankmodul bereitzustellen und das Schutzelement vor Manipulationen jeglicher Art, sogar bei länger andauernden Ladevorgängen, zu schützen. Ferner ist es Aufgabe der Erfindung, ein verbessertes System mit einem entsprechenden Tankmodul und einem mobilen Bauteil, insbesondere einem Ladestecker und/oder einem ID-Geber, zu ermöglichen. Weiterhin ist es Aufgabe der Erfindung, ein verbessertes Verfahren zum Betätigen eines entsprechenden Tankmoduls zur Verfügung zu stellen.

Diese Aufgabe wird ausgehend vom Tankmodul gemäß dem Oberbegriff des Anspruches 1 in Verbindung mit den kennzeichnenden Merkmalen gelöst. Weitere vorteilhafte Weiterbildungen der Erfindung sind in den abhängigen Ansprüchen angegeben.

Die Erfindung schließt die technische Lehre ein, dass das Schutzelement derart gelagert ist, dass die Außenfläche des Schutzelementes in der Ruhestellung und die Außenfläche des Schutzelementes in der Betriebsstellung parallel zueinander ausgerichtet sind. In der Ruhestellung kann das Schutzelement derart positioniert werden, dass die Außenfläche des Schutzelementes im Wesentlichen parallel zu einer Fahrzeugaußenhaut die Aufnahme verschließt. In der Betriebsstellung kann das Schutzelement wiederum derart positioniert werden, dass die Außenflächen des Schutzelementes parallel zu ihrer Ausrichtung in der Ruhestellung angeordnet wird. Mit anderen Worten kann die Außenfläche des Schutzelementes in der Betriebsstellung des Schutzelementes parallel zur Fahrzeugaußenhaut positioniert werden.

Der Erfindungsgedanke liegt dabei darin, dass die Außenfläche des Schutzelementes bzw. das Schutzelement im Ganzen in der Ruhestellung und der Betriebsstellung derart ausgerichtet wird und/oder zwischen der Ruhestellung und der Betriebsstellung derart bewegt wird, dass die Außenfläche des Schutzelementes bzw. das Schutzelement selbst für einen Ladevorgang, insbesondere in der Betriebsstellung des Schutzelementes, im Wesentlichen parallel zu einer Fahrzeugaußenhaut ausgerichtet wird. Mit anderen Worten wird die Außenfläche des Schutzelementes bzw. das Schutzelement im Ganzen in der Betriebsstellung im Wesentlichen entlang der Fahrzeugaußenhaut ausgerichtet. Somit wird es schwierig, mitunter unmöglich, das Schutzelement zu manipulieren, bspw. anzuheben, zu verdrehen oder gar abzubrechen. Folglich wird das Schutzelement zuverlässig vor Manipulationen jeglicher Art geschützt.

Ferner kann im Rahmen der Erfindung ein Betätigungsbereich vorgesehen sein, in welchem die Aktivierungshandlung des Benutzers am Schutzelement und/oder an einer Fahrzeugaußenhaut erfasst werden kann. Somit kann der Vorteil erreicht werden, dass die Aktivierungshandlung des Benutzers nur in einem speziellen Ort, nämlich dem Betätigungsbereich, erfasst werden kann. Somit kann nur eine bewusste, insbesondere zielgerichtete, Aktivierungshandlung bewirken, dass das Schutzelement zwischen der Ruhestellung und der Betriebsstellung überführt werden kann. Fehlerhafte und/oder ungewollte Aktivierungen des Schutzelementes, bspw. in einer Waschstraße durch eine Bürste oder durch eine zufällige Annäherung eines Objekts, können dadurch reduziert, insbesondere vermieden, werden.

Vorteilhafterweise kann der Betätigungsbereich eine Erkennung, vorzugsweise in Form einer Strukturierung und/oder eine Markierung, aufweisen, um den Betätigungsbereich optisch und/oder haptisch für den Benutzer erkennbar zu machen. Somit kann der Benutzer auf den Betätigungsbereich hingewiesen werden. Dadurch kann die Betätigung des erfindungsgemäßen Tankmoduls bequem, beinahe intuitiv, erfolgen. Dies erhöht den Benutzerkomfort des erfindungsgemäßen Tankmoduls.

Weiterhin kann es im Rahmen der Erfindung vorgesehen sein, dass der Betätigungsbereich in Form einer Aussparung im Schutzelement oder in einer Fahrzeugaußenhaut ausgebildet sein kann. Somit kann der Vorteil erreicht werden, dass eine intuitive Aktivierungshandlung zum Betätigen des Sensors bereitgestellt werden kann. Dabei kann durch ein unmittelbares Betätigen des Sensors sowohl eine Überführung des Schutzelementes aus der Ruhestellung in die Betriebsstellung als auch aus der Betriebsstellung in die Ruhestellung eingeleitet werden. Zudem ist es denkbar, dass der Betätigungsbereich aus Kunststoff ausgebildet sein kann. Dabei kann durch ein Betätigen des Sensors über den Betätigungsbereich, bspw. durch Drücken am Betätigungsbereich, das Schutzelement aus der Ruhestellung in die Betriebsstellung und durch ein direktes Betätigen des Sensors das Schutzelement aus der Betriebsstellung in die Ruhestellung überführt werden. Ein Betätigungsbereich, sei es in Form einer Aussparung oder als ein Betätigungsbereich aus Kunststoff, ist vorteilhaft, weil somit die Aktivierung des Schutzelementes auf unterschiedliche Weise und/oder mit Hilfe verschiedener Technologien erfolgen kann. Dabei kann der Sensor unterhalb der Aussparung bzw. unterhalb des Betätigungsbereiches aus Kunststoff positioniert werden. Ein solcher Betätigungsbereich kann vorteilhafterweise ermöglichen, den Sensor als einen optischen Sensor, einen kapazitiven Sensor, einen Drucksensor, einen induktiven Sensor oder einen NFC-Sensor auszugestalten. Somit kann eine Vielfalt an Gestaltungsmöglichkeiten des erfindungsgemäßen Tankmoduls bereitgestellt werden, um unterschiedlichen Benutzerwünschen zu entsprechen.

Des Weiteren kann es im Rahmen der Erfindung vorgesehen sein, dass der Betätigungsbereich in Form eines elastisch verformbaren Bereichs im Schutzelement oder in einer Fahrzeugaußenhaut ausgebildet sein kann. Somit kann der Vorteil erreicht werden, dass zumindest in der Ruhestellung des Schutzelementes ein geschlossenes System bereitgestellt werden kann, das vor äußeren Einflüssen und Manipulationen abgesichert sein kann. Ein verformbarer Betätigungsbereich ist für einen Sensor vorteilhaft, welcher als ein Drucksensor ausgebildet sein und/oder mindestens ein LDC-Sensorelement aufweisen kann. Ein Drucksensor kann vorteilhaft sein, weil ein Drücken eine einfache Aktivierungshandlung ist, die leicht auszuführen ist. Ein Sensor mit mindestens einem LDC-Sensorelement kann deswegen vorteilhaft sein, um einen bestimmten Detektionspunkt zum Erfassen einer Aktivierungshandlung bereitzustellen, der präzise eingestellt werden kann. Somit können ungewollte Aktivierungen des Schutzelementes vorteilhafterweise reduziert, insbesondere vermieden, werden. Zum Überführen des Schutzelementes aus der Ruhestellung in die Betriebsstellung kann dabei ein Drücken am Betätigungsbereich und zum Überführen des Schutzelementes aus der Betriebsstellung in die Ruhestellung ein Drücken am Sensor als eine Aktivierungshandlung ausgeführt werden. Ein LDC-Sensorelement dient dabei zur Erfassung von zumindest einer Veränderung einer Induktivität, d. h. insbesondere zur Induktivitätsmessung. Für ein LDC-Sensorelement sind normalerweise eine Platine und eine Spule erforderlich. Der Sensor mit einem LDC-Sensorelement kann gleichzeitig die Impedanz und die Resonanzfrequenz eines LC-Schwenkkreises messen. Ein solcher Sensor kann vorzugsweise unempfindlich gegenüber äußeren Einflüssen wie Feuchtigkeit oder Verunreinigung als ein abgeschlossenes System gelagert werden. Folglich kann zuverlässig eine Fehldetektion durch Einflüsse wie Regen, welche zu Störungen bei bspw. kapazitiven Sensoren führen, vermieden werden. Eine Fehldetektion durch äußere Einflüsse, welche eine Kraftausübung auf das Schutzelement bzw. an den Betätigungsbereich bewirken, kann bspw. dadurch vermieden werden, dass ausschließlich ein Detektionspunkt am Betätigungsbereich für die jeweilige Aktivierungshandlung spezifisch ist. Ein solcher Sensor, mit mindestens einem LDC-Sensorelement, hat weiterhin die Vorteile, dass er sehr empfindlich für Verformungen ist und damit zur Detektion der Aktivierungshandlung sehr schnell und zuverlässig dienen kann. Die Sensorvorrichtung hat dabei z. B. eine Auflösung unter einem Mikrometer mit bspw. einer Bittiefe zur Quantisierung der gemessenen Induktivitätswerte von mindestens 30 Bit oder wenigstens 24 Bit.

Im Rahmen der Erfindung ist zudem denkbar, dass der Sensor einen Deformationsbereich, bspw. in Form einer Kappe, aufweisen kann, an welchem die Aktivierungshandlung des Benutzers durch Verformen des Deformationsbereiches und/oder des Betätigungsbereiches erfassbar sein kann. Ein Deformationsbereich in Form einer Kappe kann vorteilhaft sein, um das Innere des Sensors unterhalb der Kappe geschützt vor Witterungseinflüssen zu lagern. Ferner ist es möglich, dass der Deformationsbereich am Betätigungsbereich und/oder an mindestens einer Lagerstelle des Schutzelementes angeordnet sein kann. Ein Deformationsbereich am Betätigungsbereich, bspw. direkt unterhalb des Betätigungsbereiches, kann vorteilhaft sein, um die Aktivierungshandlung des Benutzers zuverlässig am Betätigungsbereich erfassen zu können. Ein Deformationsbereich an mindestens einer Lagerstelle des Schutzelementes ist vorteilhaft, weil somit eine intuitive Aktivierungshandlung zum Betätigen des Sensors bereitgestellt werden kann. Dabei kann durch ein Drücken am Schutzelement sowohl eine Überführung des Schutzelementes aus der Ruhestellung in die Betriebsstellung als auch aus der Betriebsstellung in die Ruhestellung eingeleitet werden.

Ferner kann es im Rahmen der Erfindung vorgesehen sein, dass der Deformationsbereich an einer dem Betätigungsbereich zugewandten Außenseite ein optisches und/oder haptisches Anzeigeelement aufweisen kann. Somit kann der Vorteil erreicht werden, dass die dem Betätigungsbereich zugewandte Außenseite des Deformationsbereiches eine wichtige Information für den Benutzer, bspw. bzgl. der richtigen Benutzung des Sensors, anzeigen kann. Gleichwohl ist es denkbar, dass die dem Betätigungsbereich zugewandte Außenseite des Deformationsbereiches als eine Werbefläche, bspw. für ein Herstelleremblem, genutzt werden kann.

Des Weiteren kann an einer dem Betätigungsbereich zugewandten Außenseite des Deformationsbereiches ein umfangsseitig umlaufendes Faltelement ausgebildet sein, um eine Verformung des Deformationsbereiches zu ermöglichen. Dabei ist es denkbar, dass das Faltelement als eine, insbesondere dünnwandige, Membran, bevorzugt in Form eines Faltenbalges ausgebildet sein kann, die um den Deformationsbereich herum angebracht, bspw. angeformt sein kann. Somit kann der Betätigungsbereich nachgiebig verformt, bspw. eingedrückt werden, indem das Faltelement zusammengedrückt wird. Ein weiterer Vorteil des Faltelementes besteht dabei darin, dass der Deformationsbereich nach dem Verformen zuverlässig in die ursprüngliche Stellung überführt werden kann, in dem das Faltelement nach dem Zusammendrücken sich wieder entspannt. Zudem ist es möglich, dass das Faltelement aus einem elastischen Material, bspw. Kunststoff, vorzugsweise mit einer niedrigeren Viskosität als das Material des Deformationsbereiches ausgebildet sein kann. Dabei ist es denkbar, dass das Faltelement mit dem Deformationsbereich ein 2K-Bauteil bilden kann. Der Vorteil eines Faltelementes mit einer niedrigeren Viskosität, d. h. eines weicheren Faltelementes als sonstiger Deformationsbereich kann darin liegen, dass das Faltelement mit weniger Kraft zusammengedrückt werden kann. Somit kann die Verformung des Deformationsbereiches und die Betätigung des Sensors erleichtert werden.

Weiterhin ist es im Rahmen der Erfindung vorgesehen, dass der Sensor mindestens ein induktives, elastisch verformbares Aktivierungsmittel aufweist. Ferner ist es erfindungsgemäß vorgesehen, dass das mindestens eine Aktivierungsmittel als eine elektrisch leitende Folie, Beschichtung oder Element, bspw. aus Metall, vorzugsweise vollständig galvanisch getrennt, ausgebildet ist. Das mindestens eine Aktivierungsmittel kann dabei besonders bevorzugt (z. B. ausschließlich) am Deformationsbereich angeordnet und insbesondere lösbar oder unlösbar derart befestigt sein, dass sich eine Deformation des Deformationsbereiches und/oder des Betätigungsbereiches, der unmittelbar über dem Deformationsbereich liegen kann, direkt auf das Aktivierungsmittel auswirken kann. Somit kann eine zuverlässige Erfassung der Aktivierungshandlung erfolgen. Im Rahmen der Erfindung ist es z. B. denkbar, dass das Aktivierungsmittel als eine Metallfolie oder sonstige elektrisch leitende Folie innenseitig am Deformationsbereich angeordnet sein kann. Auch kann es möglich sein, dass das Aktivierungsmittel als eine Chrombeschichtung an einer Innenseite des Deformationsbereiches ausgebildet sein kann. Das mindestens eine Aktivierungsmittel kann ferner vollständig elektrisch isoliert, d. h. galvanisch getrennt und/oder nicht elektrisch mit einer Elektronik des Sensors verbunden sein. Das mindestens eine Aktivierungsmittel kann beim Verformen des Deformationsbereiches und/oder des Betätigungsbereiches relativ zu einem Detektionsbereich bewegt werden. Ein bewegbares, elektrisch leitfähiges Element, wie das Aktivierungsmittel, kann ein induktives Signal erzeugen, welches im Detektionsbereich erfasst werden kann. Somit kann die Erfassung der Aktivierungshandlung auf eine induktive Weise erfolgen. Eine induktive Erfassung der Aktivierungshandlung ist sehr präzise bzgl. einer örtlichen Auflösung am Deformationsbereich und/oder am Betätigungsbereich. Dies kann den Vorteil mit sich bringen, dass die Fehleranfälligkeit des Sensors stark reduziert werden kann, und somit eine zuverlässigere Detektion der Aktivierungshandlung ermöglicht werden kann. Eine solche induktive Erfassung der Aktivierungshandlung ist außerdem sehr empfindlich und erfordert weniger Kraft zur Verformung des Betätigungsbereiches und/oder des Deformationsbereiches. Dadurch kann der Benutzungskomfort des Tankmoduls erhöht werden.

Außerdem kann der Deformationsbereich an einer dem Betätigungsbereich abgewandten Innenseite eine Ausnehmung für das mindestens eine Aktivierungsmittel aufweisen, wobei insbesondere die Ausnehmung von einem Kragenelement umrandet sein kann. Somit kann eine Art Kappe geschaffen werden, in bzw. unterhalb welcher das Aktivierungsmittel im Betrieb des Sensors geschützt positioniert werden kann. Gleichzeitig kann das Aktivierungsmittel bei einer Verformung des Deformationsbereiches und/oder des Betätigungsbereiches mit der Innenseite des Deformationsbereiches bewegt werden, um ein induktives Signal zu erzeugen.

Im Rahmen der Erfindung ist zudem denkbar, dass in der Ausnehmung eine umfangsseitig umlaufende, insbesondere an das Kragenelement angrenzende, Verjüngung vorgesehen sein kann, um eine Verformung des Deformationsbereiches zu ermöglichen. Die Verjüngung kann dabei in Form einer Rille bzw. einer Einkerbung umfangsseitig in der Ausnehmung ausgebildet sein und vorteilhafterweise dafür sorgen, dass der Deformationsbereich umfangsseitig elastisch verformt werden kann. Die elastische Verformung kann bewirken, dass das mindestens eine Aktivierungselement beim Verformen des Deformationsbereiches bewegt werden kann, insbesondere relativ zu einem Detektionsbereich. Somit kann das Aktivierungsmittel ein induktives Signal erzeugen, welches im Detektionsbereich erfasst werden kann.

Ferner kann es im Rahmen der Erfindung vorgesehen sein, dass der Deformationsbereich an einer dem Betätigungsbereich abgewandten Innenseite, insbesondere in der Ausnehmung, ein Befestigungsmittel, insbesondere in Form eines Stößels, für das mindestens eine Aktivierungsmittel aufweisen kann, um das mindestens eine Aktivierungsmittel form- und/oder kraft- und/oder stoffschlüssig am Deformationsbereich zu befestigen. Ein Befestigungsmittel, insbesondere in Form eines Stößels, kann vorteilhaft sein, um das Aktivierungsmittel daran anzuformen und/oder um den Stößel zu wickeln und/oder an einer Außenfläche des Stößels zu kleben und/oder am Stößel anzusprühen. Somit kann das Aktivierungsmittel mit wenig Aufwand am Deformationsbereich befestigt werden. Die Herstellungskosten des Sensors können somit gesenkt werden.

Weiterhin kann es im Rahmen der Erfindung vorgesehen sein, dass der Sensor einen Detektionsbereich aufweisen kann, in welchem eine Verformung des Betätigungsbereiches und/oder des Deformationsbereiches, vorzugsweise durch eine Induktivitätsmessung, erfasst werden kann. Der Detektionsbereich kann dabei eine Verformung des Betätigungsbereiches und/oder des Deformationsbereiches durch eine relative Bewegung des Aktivierungsmittels erfassen. Dabei ist es nicht notwendig, dass das Aktivierungsmittel den Detektionsbereich unmittelbar durch eine Berührung kontaktiert, weil bei einer Induktivitätsmessung keine Kontakte geschlossen werden müssen. Somit kann eine hoch aufgelöste Erfassung einer Verformung des Betätigungsbereiches und/oder des Deformationsbereiches bereitgestellt werden.

Des Weiteren kann der Detektionsbereich mindestens eine Platine und/oder mindestens ein, vorzugsweise mehrere, LDC-Sensorelemente umfassen. Das mindestens eine, vorzugsweise mehrere LDC-Sensorelemente können in Form von flachen Spiralen ausgebildet werden, die beidseitig an der Platine angeschlossen werden können. In den Spiralen kann durch ein bewegbares, elektrisch leitfähiges Element, auf eine induktive Weise ein Rückkopplungssignal ausgelöst werden. Solche LDC-Sensorelemente können eine relative Bewegung eines leitfähigen Elementes, wie des Aktivierungselementes, hoch aufgelöst erfassen. Somit kann eine empfindliche Erfassung der Aktivierungshandlung bereitgestellt werden. Die Aktivierungshandlung kann dabei darin liegen, dass der Benutzer den Betätigungsbereich und/oder den Deformationsbereich berühren kann. Das Berühren des Betätigungsbereiches und/oder des Deformationsbereiches kann ein, wenn auch sehr leichtes, Verformen des Betätigungsbereiches und/oder des Deformationsbereiches hervorrufen, welches ein relatives Bewegen des Aktivierungsmittels zum Detektionsbereich bewirken kann und wiederum hochaufgelöst im Detektionsbereich erfasst werden kann. Durch Verwenden von mehreren LDC-Sensorelementen kann der Detektionspunkt am Betätigungsbereich sehr präzise eingestellt werden. Dadurch kann die Fehleranfälligkeit des Sensors stark reduziert werden.

Im Rahmen der Erfindung ist es denkbar, dass mehrere LDC- Sensorelemente derart symmetrisch um einen Detektionspunkt angeordnet sein können, dass eine Verformung des Betätigungsbereiches und/oder des Deformationsbereiches nur im Detektionspunkt erfassbar sein kann. Dabei ist es denkbar, dass dem Detektionspunkt am Detektionsbereich jeweils ein entsprechender Detektionspunkt am Deformationsbereich und/oder am Betätigungsbereich zugeordnet werden kann. Der Detektionspunkt am Detektionsbereich kann symmetrisch zwischen mehreren LDC-Sensorelementen angeordnet sein, um sicherzustellen, dass nur eine zielgerichtete und bewusste Aktivierungshandlung erfasst werden kann. Somit kann der Sensor genau eingestellt werden, um Fehlauslösungen, bspw. durch Waschbürsten in einer Waschanlage und/oder durch zufällig an den Sensor angenäherte Objekte zu vermeiden. Dabei ist es denkbar, dass drei oder vier LDC-Sensorelemente symmetrisch um einen Detektionspunkt angeordnet werden können, bspw. jeweils versetzt um einen Winkel auf einem Kreis und/oder an den Ecken eines Dreiecks oder eines Vierecks. Außerdem ist es denkbar, dass bspw. zwei oder vier LDC-Sensorelemente in einer Reihe angeordnet werden können, wobei symmetrisch in der Mitte zwischen den LDC-Sensorelementen ein Detektionspunkt bestimmt werden kann.

Außerdem ist es denkbar, dass der Detektionsbereich eine kapazitive Fläche aufweisen kann, um zunächst auf eine kapazitive Weise eine Annäherung eines Benutzers bzw. einer Benutzerhand zu erfassen. Danach kann zur Verifizierung der kapazitiven Erfassung der Sensor, insbesondere das mindestens eine LDC-Sensorelement abgefragt werden, um eine bewusste Aktivierungshandlung von einer zufälligen Betätigung des Sensors zu unterscheiden. Somit können vorteilhafterweise fehlerhafte Überführungen des Schutzelementes aus der Ruhestellung in die Betriebsstellung nahezu vermieden werden.

Ferner kann der Sensor einen Befestigungsbereich zum Befestigen des Sensors am Gehäuse aufweisen. Mit Hilfe des Befestigungsbereiches kann der Sensor vorteilhafterweise als ein unabhängiger Baustein am Tankmodul, insbesondere am Gehäuse befestigt werden. Zudem ist es denkbar, dass der Befestigungsbereich form- und/oder kraft- und/oder stoffschlüssig am Gehäuse befestigt sein kann. Somit kann eine lösbare oder unlösbare Befestigung des Sensors am Gehäuse erreicht werden, die mit günstigen Mitteln bewirkt werden kann.

Weiterhin kann der Befestigungsbereich eine Ausnehmung für den Detektionsbereich aufweisen, wobei insbesondere die Ausnehmung von einem Kranzelement umrandet sein kann. Somit kann eine Art Box geschaffen werden, in welcher der Detektionsbereich geschützt positioniert werden kann.

Des Weiteren ist es im Rahmen der Erfindung denkbar, dass das Kragenelement am Befestigungsbereich und das Kranzelement am Befestigungsbereich komplementär zueinander, insbesondere mit korrespondierenden Rastelementen, ausgebildet und/oder form- und/oder kraftschlüssig miteinander befestigbar sein können, sodass das mindestens eine Aktivierungsmittel und der Detektionsbereich geschützt zwischen dem Deformationsbereich und dem Befestigungsbereich anordbar sein können. Somit kann der Vorteil erreicht werden, dass der Sensor als ein abgeschlossener Baustein ausgeführt werden kann, welcher vorteilhafterweise unempfindlich gegenüber Witterungseinflüssen sein kann.

Zudem kann im Rahmen der Erfindung ein weiterer Sensor vorgesehen sein, wobei insbesondere der weitere Sensor als ein optischer Sensor, ein kapazitiver Sensor, ein Drucksensor, ein induktiver Sensor oder ein NFC-Sensor ausgebildet sein kann oder mindestens ein LDC-Sensorelement umfassen kann. Der weitere Sensor kann zum einen zur Verifizierung der Messergebnisse des Sensors herangezogen werden. Zudem ist es denkbar, dass der weitere Sensor mit einem mobilen Bauteil, bspw. einem Ladestecker und/oder einem ID-Geber, kommunizieren kann, um nach dem Öffnen des Schutzelementes automatisch einen Tankvorgang und/oder vor dem Öffnen des Schutzelementes eine Authentifizierungsabfrage zu starten. Somit kann die Funktionalität des Tankmoduls erweitert werden.

Ferner kann die Erfindung eine Antriebsvorrichtung für das Schutzelement vorsehen, wobei die Antriebsvorrichtung einen Motor und/oder ein, insbesondere selbsthemmendes, Getriebe aufweisen kann, um die Antriebswirkung für das Schutzelement bereitzustellen. Somit kann nach dem Erfassen einer Aktivierungshandlung eines Benutzers und ggf. nach einer Verifizierung der Aktivierungshandlung und/oder einer Überprüfung einer Berechtigung des Benutzers eine automatische Überführung des Schutzelementes zwischen der Ruhestellung und der Betriebsstellung eingeleitet werden. Ein selbsthemmendes Getriebe kann den Vorteil mit sich bringen, dass das Schutzelement, insbesondere in der Betriebsstellung gegenüber Krafteinwirkungen und Stößen geschützt werden kann.

Weiterhin ist es denkbar, dass das Getriebe ein Schneckenrad und/oder ein Zahnrad aufweisen kann. Ein Schneckenrad kann vorteilhafterweise mit einer Schnecke an einer Antriebswelle zusammenwirken und ein selbsthemmendes Getriebe, bspw. mit einer hohen Übersetzung, insbesondere Untersetzung, ermöglichen. Ein solches Getriebe ermöglicht eine stabile Übertragung hoher Antriebskräfte. Ein Zahnrad kann eine weitere Übersetzung, insbesondere Untersetzung, bereitstellen. Somit kann eine relativ schnelle Drehung der Antriebswelle einen relativ kleinen Arbeitsweg bei der Überführung des Schutzelementes von der Ruhestellung in die Betriebsstellung bewirken, auf welchem das Schutzelement stabil und zuverlässig geführt werden kann. Ein solches Tankmodul kann somit zuverlässig im Betrieb sein.

Des Weiteren kann die Antriebsvorrichtung einen Hebelmechanismus aufweisen, um die Antriebswirkung auf das Schutzelement zu übertragen. Ein Hebelmechanismus kann vorteilhaft sein, um nicht nur eine reine Schwenkbewegung oder eine reine Linearbewegung, sondern auch eine derartige gemischte Bewegung des Schutzelementes zu ermöglichen, am Ende welcher die Außenfläche des Schutzelementes bzw. das Schutzelement selbst im Wesentlichen parallel zu einer Fahrzeugaußenhaut angeordnet sein kann. In einer Stellung parallel zur Fahrzeugaußenhaut ist das Schutzelement weniger anfällig für Manipulationen.

Im Rahmen der Erfindung kann zudem vorgesehen sein, dass der Hebelmechanismus als ein Viergelenk-Hebelmechanismus ausgebildet sein kann. Dadurch kann der Vorteil erreicht werden, dass eine zusammengesetzte Bewegung des Schutzelementes zumindest zum Teil drehbar, bspw. um eine Kante des Gehäuses am Rande der Aufnahme, und zumindest zum Teil linear bewegbar, im Wesentlichen entlang der Fahrzeugaußenhaut bereitgestellt werden kann. Ein Viergelenk-Hebelmechanismus kann außerdem eine relativ bündige Bewegung des Schutzelementes zur Fahrzeugaußenhaut bei der Überführung des Schutzelementes zwischen der Ruhestellung und der Betriebsstellung ermöglichen, sodass in keiner der Stellungen des Schutzelementes zwischen der Ruhestellung und der Betriebsstellung das Schutzelement weit von der Fahrzeugaußenhaut absteht und somit manipulationsanfällig wird.

Der Hebelmechanismus kann ferner derart ausgeführt sein, dass das Schutzelement bei der Bewegung zwischen der Ruhestellung und der Betriebsstellung in einer ersten Bewegungsphase drehbar nach außen bzgl. der Aufnahme im Gehäuse und einer zweiten Bewegungsphase im Wesentlichen parallel zur Fahrzeugaußenhaut verfahrbar sein kann. Durch die erste Bewegungsphase kann der Vorteil erreicht werden, dass die Größe der Aufnahme reduziert werden kann. Somit kann das erfindungsgemäße Tankmodul wenig Bauraum am Kraftfahrzeug erfordern. Durch die zweite Bewegungsphase kann der Vorteil erreicht werden, dass das Schutzelement im Wesentlichen parallel zur Fahrzeugaußenhaut verfahren kann, ohne gefährlich weit von der Fahrzeugaußenhaut abzustehen.

Im Rahmen der Erfindung ist zudem möglich, dass die Antriebsvorrichtung einen Hebelmechanismus aufweisen kann, um die Antriebswirkung auf das Schutzelement zu übertragen, wobei insbesondere der Hebelmechanismus eine Kurbel aufweisen kann, die drehbar mit dem Schutzelement verbunden sein kann, um das Schutzelement anzutreiben. Somit kann ein einfacher Hebelmechanismus für das Schutzelement bereitgestellt werden.

Ferner ist es im Rahmen der Erfindung denkbar, dass der Hebelmechanismus derart ausgeführt sein kann, dass das Schutzelement bei der Bewegung zwischen der Ruhestellung und der Betriebsstellung in einer ersten Bewegungsphase drehbar nach innen in die Aufnahme im Gehäuse und in einer zweiten Bewegungsphase im Wesentlichen parallel zur Fahrzeugaußenhaut verfahrbar sein kann. Dadurch kann der Vorteil erreicht werden, dass das Schutzelement in der Betriebsstellung unzugänglich von außen, geschützt im Inneren der Aufnahme, insbesondere hinter der Fahrzeugaußenhaut angeordnet sein kann. Somit kann das Schutzelement gegen jegliche Manipulationen zuverlässig geschützt werden.

Weiterhin kann die Antriebsvorrichtung einen zweiten Hebelmechanismus aufweisen, um die Bewegung des Schutzelementes zu stabilisieren, wobei insbesondere der zweite Hebelmechanismus mindestens einen schwenkbar am Gehäuse gelagerten, bspw. bogenförmigen, Hebel aufweisen kann, der drehbar mit dem Schutzelement verbunden sein kann, um die Bewegung des Schutzelementes zumindest zum Teil zu bestimmen. Der zweite Hebelmechanismus ist vorteilhafterweise passiv ausgebildet, d. h. dass keine Antriebswirkung über den zweiten Hebelmechanismus übertragen wird. Der Vorteil des zweiten Hebelmechanismus liegt dabei darin, dass er die Bewegung des Schutzelementes mitbestimmen und somit stabilisieren kann. Ein bogenförmiger Hebel ist vorteilhaft, um eine Bewegung des Schutzelementes um eine Kante des Gehäuses am Rande der Aufnahme zu ermöglichen, ohne mit der Kante zu kollidieren.

Des Weiteren kann im Gehäuse ein Ablauf vorgesehen sein, um Feuchtigkeit, bspw. Regenwasser, aus der Aufnahme des Gehäuses abzuleiten. Der Ablauf kann dabei nach außen führen. Der Vorteil liegt dabei darin, dass somit während eines, sogar langen, Ladevorganges, wenn das Schutzelement die Aufnahme freigibt, eine eventuell in die Aufnahme gelangende Feuchtigkeit sicher abgeleitet werden kann, ohne die Funktion der Komponenten des Tankmoduls zu beeinträchtigen.

Ferner wird die erfindungsgemäße Aufgabe durch ein System gelöst, welches mit einem Tankmodul für ein Kraftfahrzeug, insbesondere wie oben beschrieben ist, wobei das Tankmodul mit einem Gehäuse, in welchem eine Aufnahme vorgesehen ist, wobei in der Aufnahme ein Anschlusselement, insbesondere eine Ladesteckdose, angeordnet ist, einem Schutzelement für das Anschlusselement, welches zwischen zumindest zwei Stellungen bewegbar ist, nämlich: einer Ruhestellung, in welcher die Aufnahme durch das Schutzelement verschließbar ist, und einer Betriebsstellung, in welcher die Aufnahme durch das Schutzelement freigebbar ist, sodass das Anschlusselement freigelegt ist, und mindestens einem Sensor zum Erfassen einer Aktivierungshandlung eines Benutzers, um das Schutzelement zwischen der Ruhestellung und der Betriebsstellung zu überführen, ausgeführt ist, und einem mobilen Bauteil, wobei das mobile Bauteil ein Aktivierungselement aufweist, welches mit dem Sensor und/oder einem weiteren Sensor zusammenwirkt, um das Schutzelement berührungslos anzutreiben oder eine Funktion einzuleiten.

Das erfindungsgemäße System bietet vorteilhafterweise ein intelligentes, interaktives System mit einem Tankmodul und einem mobilen Bauteil. Als ein mobiles Bauteil sind ein Ladestecker für das Anschlusselement und/oder ein ID-Geber denkbar. Eine Erfassung einer Aktivierungshandlung am Sensor kann vorteilhafterweise bewirken, dass das Schutzelement betätigt wird. Zudem kann mit Hilfe des mobilen Bauteils durch Zusammenwirken des Aktivierungselementes mit demselben oder mindestens einem weiteren Sensor am Tankmodul, zumindest eine weitere Funktion neben dem Betätigen des Schutzelementes ausgelöst werden, die vor dem Betätigen des Schutzelementes, wie. z. B. eine ID-Abfrage, und/oder danach ausgeführt werden kann, wie z. B. ein Zahlvorgang. Gleichwohl ist es aber auch denkbar, dass das Aktivierungselement mit dem Sensor zusammenwirken kann, um das Schutzelement berührungslos, bspw. durch eine Annäherung des Aktivierungselementes an den Sensor, anzutreiben.

Weiterhin ist es denkbar, dass am Ladestecker ein NFC-Tag als Aktivierungselement vorgesehen sein kann, bevorzugt mit einer Reichweite von 0 bis 5 cm, besonders bevorzugt mit einer Reichweite von 0 bis 2 cm, vorzugsweise berührungsbehaftet mit dem Sensor und/oder einem weiteren Sensor. Dabei kann der Vorteil erreicht werden, dass mit Hilfe des NFC-Tags, bspw. über kurze Distanzen oder berührungsbehaftet, Zahlungen für den Ladevorgang getätigt werden können. Dabei ist aus Sicherheitsgründen wichtig, dass der NFC-Tag eine relativ kurze Reichweite aufweist oder berührungsbehaftet funktioniert, um Fernzugriffe zu vermeiden. Dabei ist es denkbar, dass der NFC-Tag als ein RIFD-Transponder ausgebildet sein kann und mit einem Sensor bzw. einem weiteren Sensor am Tankmodul, bspw. in Form eines aktiven RIFD-Transponders, zusammenwirken kann. Für eine berührungslose Zusammenwirkung mit dem aktiven RIFD-Transponder am Tankmodul kann der NFC-Tag am Ladestecker passiv ausgestaltet sein. Für eine berührungsbehaftete Zusammenwirkung mit dem aktiven RIFD-Transponder am Tankmodul kann der NFC-Tag am Ladestecker ebenfalls aktiv ausgestaltet sein.

Des Weiteren wird die erfindungsgemäße Aufgabe durch ein Verfahren zum Betätigen eines Tankmoduls für ein Kraftfahrzeug, insbesondere wie oben beschrieben, gelöst, wobei das Tankmodul mit einem Gehäuse, in welchem eine Aufnahme vorgesehen ist, wobei in der Aufnahme ein Anschlusselement, insbesondere eine Ladesteckdose, angeordnet ist, einem Schutzelement für das Anschlusselement, welches zwischen zumindest zwei Stellungen bewegbar ist, nämlich: einer Ruhestellung, in welcher die Aufnahme durch das Schutzelement verschließbar ist, und einer Betriebsstellung, in welcher die Aufnahme durch das Schutzelement freigebbar ist, sodass das Anschlusselement freigelegt ist, und mindestens einem Sensor zum Erfassen einer Aktivierungshandlung eines Benutzers, um das Schutzelement zwischen der Ruhestellung und der Betriebsstellung zu überführen, ausgeführt ist, wobei das Schutzelement derart angetrieben wird, dass die Außenfläche des Schutzelementes in der Ruhestellung und die Außenfläche des Schutzelementes in der Betriebsstellung parallel zu einander ausgerichtet werden. Mit Hilfe des erfindungsgemäßen Verfahrens werden die gleichen Vorteile erreicht, die oben zu dem erfindungsgemäßen Tankmodul und/oder zum erfindungsgemäßen System beschrieben wurden. Zur Vermeidung von Wiederholungen wird vorliegend vollumfänglich darauf Bezug genommen.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Darstellung eines ersten Ausführungsbeispiels eines erfindungsgemäßen Tankmoduls,
- Figur 2: eine schematische Darstellung eines zweiten Ausführungsbeispiels des erfindungsgemäßen Tankmoduls,
- Figur 3: eine schematische Darstellung eines dritten Ausführungsbeispiels des erfindungsgemäßen Tankmoduls,
- Figur 4: eine schematische Darstellung eines vierten Ausführungsbeispiels des erfindungsgemäßen Tankmoduls,
- Figur 5: eine schematische Darstellung eines Sensors gemäß einer Ausführungsform des Sensors,
- Figur 6: eine schematische Darstellung eines Sensors gemäß einer weiteren Ausführungsform des Sensors,
- Figur 7a: eine schematische Darstellung eines Sensors gemäß einer weiteren Ausführungsform des Sensors,
- Figur 7b: eine schematische Darstellung eines Sensors gemäß einer weiteren Ausführungsform des Sensors,
- Figur 8a: eine schematische Darstellung des Sensors gemäß der Figur 5 oder 6,
- Figur 8b: eine schematische Darstellung des Sensors gemäß einer weiteren Ausführungsform,
- Figur 8c: eine schematische Darstellung des Sensors gemäß einer weiteren Ausführungsform,
- Figur 9: eine Schnittdarstellung des Sensors gemäß der Figur 5 oder 6,
- Figur 10: eine Schnittdarstellung des Sensors gemäß der Figur 5 oder 6,
- Figur 11: eine schematische Darstellung einer Antriebsvorrichtung gemäß einer Ausführungsform,
- Figur 12: eine schematische Darstellung einer Antriebsvorrichtung gemäß einer weiteren Ausführungsform,
- Figur 13: eine schematische Darstellung eines erfindungsgemäßen Systems gemäß einer Ausführungsform, und
- Figur 14: eine schematische Darstellung des erfindungsgemäßen Systems gemäß einer weiteren Ausführungsform.

In den nachfolgenden Figuren werden für die gleichen technischen Merkmale auch von unterschiedlichen Ausführungsbeispielen die identischen Bezugszeichen verwendet.

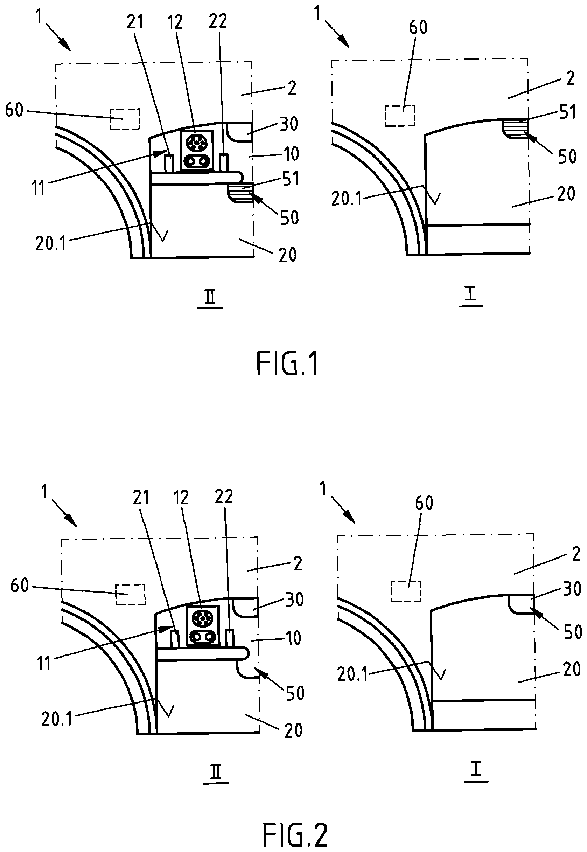

Die Figuren 1 bis 4 zeigen ein erfindungsgemäßes Tankmodul 1 für ein Kraftfahrzeug, insbesondere ein Elektrofahrzeug, welches mit einem Gehäuse 10 ausgebildet ist. Das Gehäuse 10 kann dabei als ein Montageelement bzw. eine Montagehilfe des Tankmoduls 1 am Kraftfahrzeug ausgebildet sein. Im Gehäuse 10 ist eine Aufnahme 11 vorgesehen, in welcher ein Anschlusselement 12, bspw. in Form einer Ladesteckdose 12, angeordnet ist. Die Ladesteckdose 12 ist zum Aufladen einer Batterie des Kraftfahrzeuges, insbesondere einer Traktionsbatterie des Elektrofahrzeuges, vorgesehen. Alternativ ist es jedoch möglich, dass bei einem kraftstoffbetriebenen Kraftfahrzeug das Anschlusselement 12 als ein Einfüllrohr ausgebildet sein kann. Zum Verschließen der Aufnahme 11 ist ein Schutzelement 20 vorgesehen, welches zwischen zumindest zwei Stellungen I, II bewegbar ist, nämlich: einer Ruhestellung I, in welcher die Aufnahme 11 durch das Schutzelement 20 verschließbar ist (rechts in den Figuren 1 bis 4), und einer Betriebsstellung II, in welcher die Aufnahme 11 durch das Schutzelement 20 freigebbar ist, sodass das Anschlusselement 12 freigelegt ist (links in den Figuren 1 bis 4). Das Schutzelement 20 ist dabei mit einer Außenfläche 20.1 ausgeführt und derart gelagert, dass die Außenfläche 20.1 des Schutzelementes 20 in der Ruhestellung I und die Außenfläche 20.1 des Schutzelementes 20 in der Betriebsstellung II parallel zu einander ausgerichtet ist. Ferner weist das erfindungsgemäße Tankmodul 1 mindestens einen Sensor 30 zum Erfassen einer Aktivierungshandlung eines Benutzers auf, um das Schutzelement 20 zwischen der Ruhestellung I und der Betriebsstellung II zu überführen. Zudem kann ein weiterer Sensor 60 am Tankmodul 1 vorgesehen sein, welcher für eine weitere Funktion ausgelegt sein kann, bspw. für eine ID-Abfrage oder einen Bezahlvorgang.

Die Außenfläche 20.1 wird in der Ruhestellung I des Schutzelementes 20 derart positioniert, dass die Außenfläche 20.1 des Schutzelementes 20 im Wesentlichen parallel zu einer Fahrzeugaußenhaut 2 die Aufnahme 11 verschließt. In der Betriebsstellung II kann das Schutzelement 20 wiederum derart positioniert werden, dass die Außenfläche 20.1 des Schutzelementes 20 parallel zu ihrer Ausrichtung in der Ruhestellung I des Schutzelementes 20 angeordnet wird. Mit anderen Worten kann die Außenfläche 20.1 des Schutzelementes 20 sowohl in der Betriebsstellung II als auch in der Ruhestellung I des Schutzelementes 20 parallel zur Fahrzeugaußenhaut 2 positioniert werden. Vorteilhafterweise wird das Schutzelement 20 durch eine derartige Positionierung der Außenfläche 20.1 zuverlässig vor Manipulationen jeglicher Art geschützt, wobei es schwierig, mitunter unmöglich wird, das Schutzelement 20 zu manipulieren, sei es anzuheben, zu verdrehen oder gar abzubrechen.

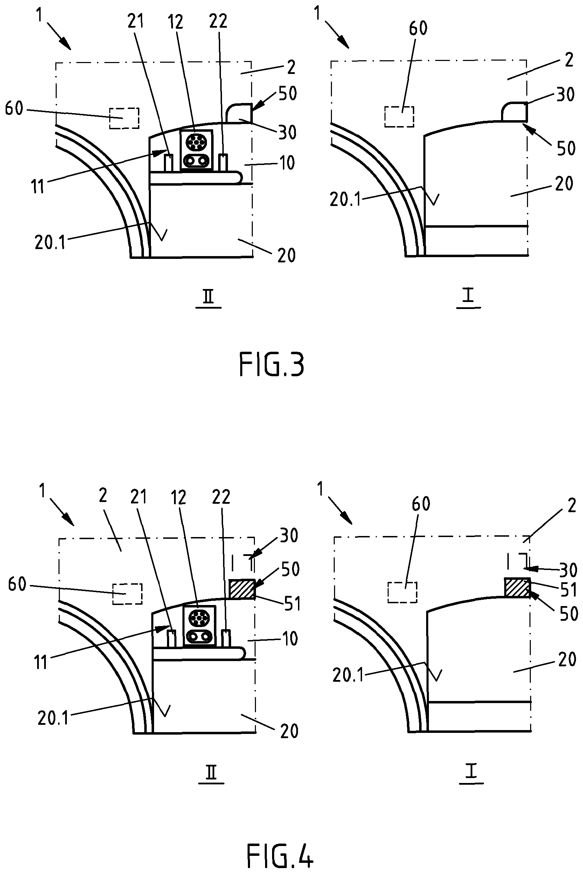

Am Tankmodul 1 ist ein Betätigungsbereich 50 vorgesehen, in welchem die Aktivierungshandlung des Benutzers am Schutzelement 20 (siehe die Figuren 1 und 2) und/oder an einer Fahrzeugaußenhaut 2 (siehe die Figuren 3 und 4) erfassbar ist. Am Betätigungsbereich 50 kann gemäß den Ausführungsformen in der Figur 1 oder 4 eine Erkennung 51, bspw. in Form einer Strukturierung und/oder einer Markierung, vorgesehen sein, um den Betätigungsbereich 50 optisch und/oder haptisch hervorzuheben und somit für den Benutzer erkennbar zu machen. Somit kann der Benutzerkomfort des Tankmoduls 1 erhöht werden.

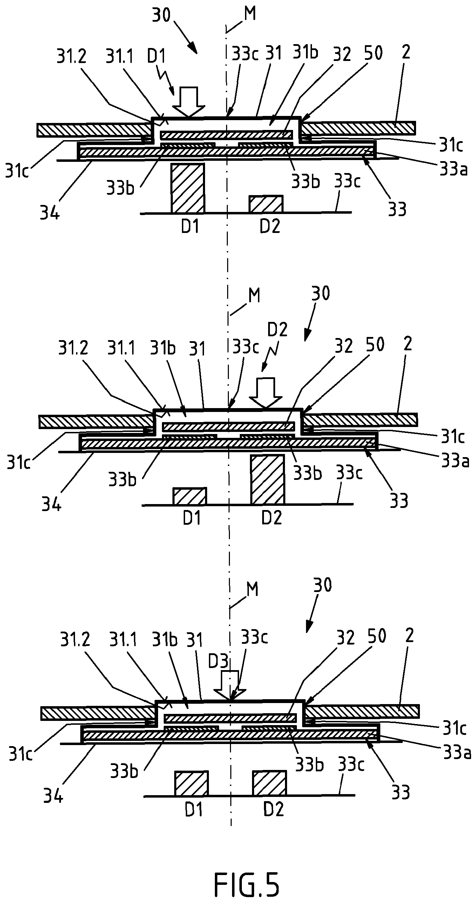

Die Figur 1 zeigt den Betätigungsbereich 50 in Form eines elastisch verformbaren Bereiches 50 am Schutzelement 20, der in der Ruhestellung I des Schutzelementes 20 über dem Sensor 30 liegt. Der Betätigungsbereich 50 kann bspw. aus einem Metall, bspw. Aluminium oder Stahl, ausgebildet sein. Ein solcher Betätigungsbereich 50 schirmt elektro-magnetische Wellen ab. In Verbindung mit einem solchen Betätigungsbereich 50 aus Metall kann ein Drucksensor 30, bspw. ein LDC-Sensor 30 eingesetzt werden, der nachfolgend mit Hilfe der Figuren 5 bis 10 beschrieben wird. Alternativ ist es denkbar, dass der Betätigungsbereich 50 aus einem Kunststoff ausgebildet sein kann. In Verbindung mit einem Betätigungsbereich 50 aus Kunststoff kann der Sensor 30 auf unterschiedliche Arten ausgebildet werden, wie z. B. ein optischer Sensor, ein kapazitiver Sensor, ein Drucksensor, ein induktiver Sensor oder ein NFC-Sensor. Zum Überführen des Schutzelementes 20 aus der Ruhestellung I in die Betriebsstellung II kann dabei am Betätigungsbereich 50 gedrückt werden. Zum Überführen des Schutzelementes 20 aus der Betriebsstellung II in die der Ruhestellung I kann dabei am Sensor 30 gedrückt werden.

Die Figur 2 zeigt den Betätigungsbereich 50 in Form einer Aussparung 50 im Schutzelement 20, die in der Ruhestellung I des Schutzelementes 20 über dem Sensor 30 liegt. In Verbindung mit einem solchen Betätigungsbereich 50 kann der Sensor 30 auf unterschiedliche Arten ausgebildet werden, wie z. B. ein optischer Sensor, ein kapazitiver Sensor, ein Drucksensor, ein induktiver Sensor oder ein NFC-Sensor. Zum Überführen des Schutzelementes 20 aus der Ruhestellung I in die Betriebsstellung II und umgekehrt kann dabei der Sensor 30 betätigt werden.

Die Figur 3 zeigt den Betätigungsbereich 50 in Form einer Aussparung 50 in der Fahrzeugaußenhaut 2, die unabhängig von der Stellung I, II des Schutzelementes 20 über dem Sensor 30 liegt. Dabei kann der Sensor 30 auf unterschiedliche Arten ausgebildet werden, wie z. B. ein optischer Sensor, ein kapazitiver Sensor, ein Drucksensor, ein induktiver Sensor oder ein NFC-Sensor. Zum Überführen des Schutzelementes 20 aus der Ruhestellung I in die Betriebsstellung II und umgekehrt kann dabei der Sensor 30 betätigt werden.

Die Figur 4 zeigt den Betätigungsbereich 50 in Form eines elastisch verformbaren Bereiches 50 an einer Fahrzeugaußenhaut 2, der unabhängig von der Stellung I, II des Schutzelementes 20 über dem bzw. angrenzend an den Sensor 30 liegt. Der Betätigungsbereich 50 kann dabei aus einem Metall ausgebildet sein. In Verbindung mit einem solchen Betätigungsbereich 50 aus Metall kann ein Drucksensor 30, bspw. ein LDC-Sensor 30 eingesetzt werden, der nachfolgend in den Figuren 5 bis 10 beschrieben wird. Alternativ ist es denkbar, dass der Betätigungsbereich 50 aus einem Kunststoff ausgebildet sein kann. In Verbindung mit einem solchen Betätigungsbereich 50 aus Kunststoff kann der Sensor 30 auf unterschiedliche Arten ausgebildet werden, wie z. B. ein optischer Sensor, ein kapazitiver Sensor, ein Drucksensor, ein induktiver Sensor oder ein NFC-Sensor. Zum Überführen des Schutzelementes 20 aus der Ruhestellung I in die Betriebsstellung II und umgekehrt kann dabei am Betätigungsbereich 50 gedrückt werden.

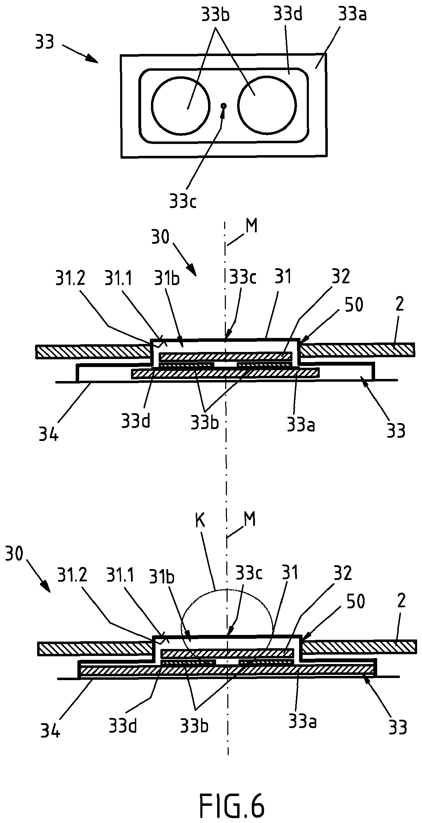

Die Figuren 5 und 6 zeigen eine schematische Darstellung eines Sensors 30 in Form eines LDC-Sensors 30. Ein solcher Sensor 30 ist kostengünstig, kann genau eingestellt werden und kontaktlos kleine Druckwerte erfassen. Dabei sind Auflösungen unter einem Mikrometer mit 16 Bit Resonanzimpedanz- und 24 Bit Induktivitätswerten möglich. Der LDC-Sensor 30 weist eine verbesserte Zuverlässigkeit gegenüber kontaktbehafteten Drucksensoren auf, wobei die kontaktlose Erfassung unempfindlich gegenüber nichtleitenden Verunreinigungen ist, wie bspw. Öl, Schmutz oder Staub, die die Lebensdauer eines kontaktbehafteten Sensors 30 beeinträchtigen können.

Der Sensor 30 umfasst dabei einen Deformationsbereich 31 in Form einer Kappe 31, die im gezeigten Ausführungsbeispiel in einer Aussparung 50 als Betätigungsbereich 50 an einer Fahrzeugaußenhaut 2 angeordnet ist (vgl. die Figur 3). Weiterhin ist es denkbar, dass der Deformationsbereich 31 unterhalb des elastisch verformbaren Bereiches 50 als Betätigungselement 50 positioniert sein kann, gleichwohl am Schutzelement 20 (vgl. die Figur 1) oder an der Fahrzeugaußenhaut 2 (vgl. die Figur 4). Zudem ist es denkbar, dass der Deformationsbereich 31 in einer Aussparung 50 am Schutzelement 20 angeordnet sein kann (vgl. die Figur 2).

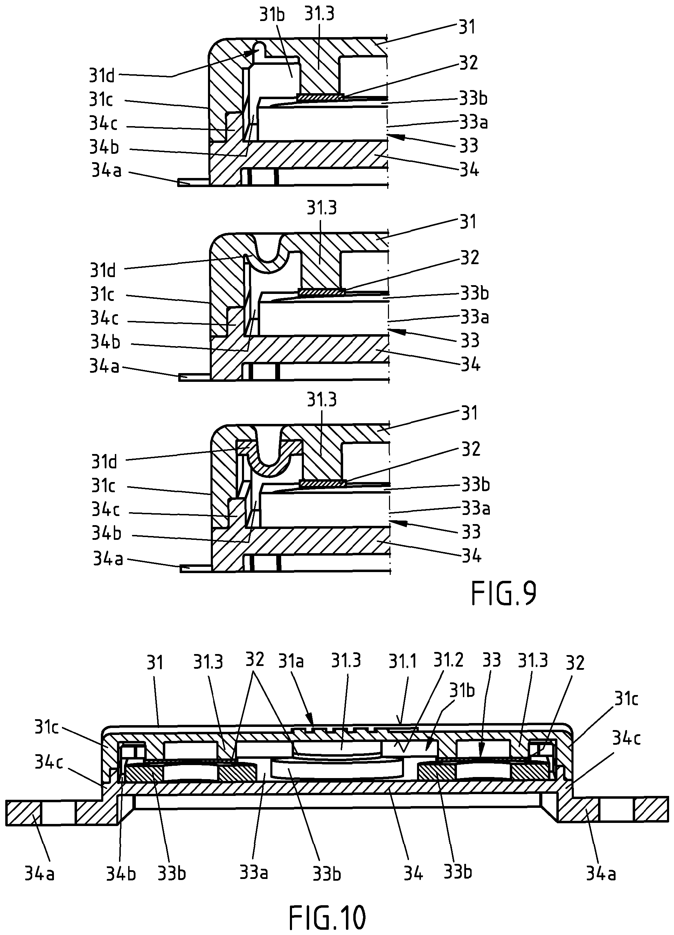

An einer Außenseite 31.1 kann der Deformationsbereich 31 ein Anzeigeelement 31a, bspw. in Form einer Herstellerkennung, aufweisen, wie nachfolgend in der Figur 10 angedeutet ist. Zudem ist es denkbar, dass das Anzeigeelement 31a zum Anzeigen einer Information, bspw. einer Gebrauchsanweisung zum richtigen Betätigen des Sensors, ausgelegt sein kann. Weiterhin ist es denkbar, dass das Anzeigeelement 31a zum Anzeigen eines richtigen Detektionspunktes 33c ausgelegt sein kann. Der Detektionspunkt 33c wird im Nachfolgenden mit Hilfe der Figuren 5 und 6 erklärt.

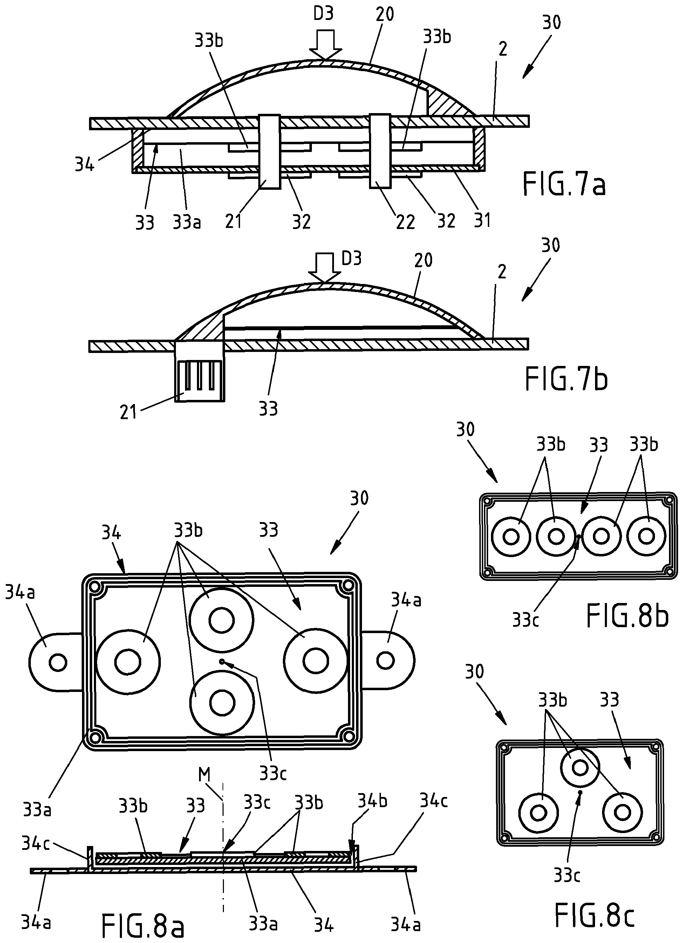

An einer Innenseite 31.2 des Deformationsbereiches 31 ist eine Ausnehmung 31b vorgesehen, die durch ein Kragenelement 31c umrandet ist. In der Ausnehmung 31b ist ein Aktivierungsmittel 32 angeordnet. Das Aktivierungsmittel 32 kann dabei in Form einer Metallfolie ausgebildet sein. Unter dem Aktivierungsmittel 32 ist der Detektionsbereich 33 mit einer Platine 33a und zwei LDC-Sensorelementen 33b vorgesehen, welcher auf einem Befestigungsbereich 34 angeordnet ist. Die LDC-Sensorelemente 33b sind dabei symmetrisch um den Detektionspunkt 33c, genau in der Mitte M zwischen den zwei LDC-Sensorelementen 33b angeordnet. Die gestrichelte Linie zeigt dabei die Mitte M zwischen den zwei LDC-Sensorelementen 33b. Die Anzahl von LDC-Sensorelementen 33b gleich zwei ist rein bspw. angegeben. Weiterhin ist es denkbar, dass nur ein LDC-Sensorelement 33b vorgesehen sein kann. Um eine genauere Erfassung einer gezielten Betätigung des Sensors 30 zu erreichen, sind mehrere LDC-Sensorelemente 33b vorteilhaft. Dabei ist es denkbar, dass drei oder vier LDC-Sensorelemente 33b vorgesehen sein können, wie es in den Figuren 8a bis 8c gezeigt ist. Eine präzise Betätigung des Sensors 30, genau im Detektionspunkt 33c, ist vorteilhaft, um Fehlauslösungen des Sensors 30 zu vermeiden.

Der Detektionspunkt 33c wird dabei derart ausgewählt, dass die LDC-Sensorelemente 33d in jeder Ausführungsform der Figuren 5 bis 10 symmetrisch um den Detektionspunkt 33c verteilt sind. Die gestrichelte Linie, die durch die Mitte M zwischen den LDC-Sensorelementen 33d verläuft, zeigt dass dem Detektionspunkt 33c ein entsprechender Detektionspunkt 33c am Deformationsbereich 31 zugeordnet werden kann.

Der Sensor 30 arbeitet dabei auf eine induktive Weise. Durch eine, sogar sehr geringe, Verformung des Deformationsbereiches 31 kann die relative Position bzw. der Abstand des Aktivierungsmittels 32 zu den LDC-Sensorelementen 33b verändert werden. Das Aktivierungsmittel 32 ist aus einem leitenden Material ausgebildet. Die LDC-Sensorelemente 33b sind in Form von flachen Spiralen ausgebildet, in welchen durch Positionsänderung bzw. Annäherung des leitenden Aktivierungselementes 32 zum jeweiligen LDC-Sensorelement 33b ein magnetisches Feld induziert werden kann. Ob der Sensor 30 betätigt wird, hängt von der Position der Druckeinwirkung ab. Wie oben oder in der Mitte der Figur 5 gezeigt ist, ist ein, sogar starker, Druck D1 links oder ein, sogar starker, Druck D2 rechts auf die Deformationsfläche 31 wirkungslos. Nur ein zielgerichteter Druck D3 in dem Detektionspunkt 33c, der genau in der Mitte M zwischen den zwei LDC-Sensorelementen 33b liegt, kann eine ausreichende und ungefähr gleiche Druckeinwirkung D1, D2 sowohl auf das linke LDC-Sensorelement 33b als auch auf das rechte LDC- Sensorelement 33b erzeugen, um den Sensor 30 zu betätigen. Somit kann eine Fehlbetätigung des Sensors 30, bspw. durch Waschbürsten in einer Waschstraße oder durch ein zufällig angenähertes Objekt, reduziert oder gar vermieden werden.

Die Figur 6 zeigt den Sensor 30 gemäß einem weiteren Ausführungsbeispiel schematisch von oben, wobei in diesem Ausführungsbeispiel der Sensor 30 zudem eine kapazitive Fläche 33d auf der Platine 33a aufweisen kann. Die kapazitive Fläche 33d kann ein kapazitives Feld K erzeugen. Mit der kapazitiven Fläche 33d kann eine zusätzliche Funktion realisiert werden, um bspw. auf eine kapazitive Weise eine Annäherung eines Benutzers bzw. einer Benutzerhand zu erfassen. Diese Funktion kann bspw. einer Betätigung des Sensors 30 vorgelagert sein, um ggf. den Sensor 30 einzuschalten. Vorteilhafterweise können somit zwei Kontrollmechanismen bereitgestellt werden, um eine bewusste Aktivierungshandlung von einer zufälligen Betätigung des Sensors 30 zu unterscheiden. Somit können vorteilhafterweise fehlerhafte Überführungen des Schutzelementes 20 aus der Ruhestellung I in die Betriebsstellung II vermieden werden.

Die Figuren 7a und 7b zeigen ein weiteres Ausführungsbeispiel der Erfindung gemäß welchem der Sensor 30 an einer Lagerstelle 21 (s. die Figur 7b) oder an zwei Lagerstellen 21, 22 (s. die Figur 7a) des Schutzelementes 20 vorgesehen sein kann.

Die Figur 7a zeigt, dass der Deformationsbereich 31 an den Lagerstellen 21, 22 des Schutzelementes 20 vorgesehen sein kann. Ferner weist der Sensor 30 jeweils ein Aktivierungsmittel 32 an jeder Lagerstelle 21, 22 sowie einen Detektionsbereich 33 mit einer Platine 33a und jeweils einem LDC-Sensorelement 33b jeweils um eine Lagerstelle 21, 22 auf. Der Befestigungsbereich 34 kann dabei an einer Innenseite der Fahrzeugaußenhaut 2 ausgebildet sein. Durch Einwirken eines Druckes D3 in der Mitte M zwischen den Lagerstellen 21, 22 kann der Sensor 30 betätigt werden.

Die Figur 7 zeigt, dass es grundsätzlich möglich ist, den Sensor 30 mit einem Detektionsbereich 33 an einer Lagerstelle 21 des Schutzelementes 20 anzuordnen.

Gemäß den Figuren 7a und 7b kann durch ein Drücken D3 am Schutzelement 20 sowohl eine Überführung des Schutzelementes 20 aus der Ruhestellung I in die Betriebsstellung II als auch aus der Betriebsstellung II in die Ruhestellung I eingeleitet werden.

Die Figur 8a zeigt einen Sensor 30 gemäß einer Ausführungsform mit vier LDC-Sensorelementen 33b, die symmetrisch um den Detektionspunkt 33c am Detektionsbereich 33 angeordnet sind. Der Detektionsbereich 33 ist dabei im Befestigungsbereich 34 mit einer Ausnehmung 34b angeordnet, wobei die Ausnehmung 34b für den Detektionsbereich 33 von einem Kranzelement 34c umrandet ist. Seitlich am Befestigungsbereich 34 können Befestigungslaschen 34a vorgesehen sein, um den Sensor 30 als Ganzes am Gehäuse 10 des Tankmoduls 1 zu befestigen. Anstelle von Befestigungslaschen 34a können beliebige Befestigungsmittel vorgesehen sein, die ein lösbares und/oder unlösbares Befestigen des Befestigungsbereiches 34 mit dem Gehäuse 10 ermöglichen können.

Die Figur 8b zeigt einen Sensor 30 gemäß einer Ausführungsform mit vier LDC-Sensorelementen 33b, die in einer Reihe am Detektionsbereich 33 angeordnet sind. Dabei liegt der Detektionspunkt 33c genau in der Mitte M zwischen den LDC-Sensorelementen 33b.

Die Figur 8b zeigt einen Sensor 30 gemäß einer Ausführungsform mit drei LDC-Sensorelementen 33b, die ebenfalls symmetrisch um den Detektionspunkt 33c angeordnet sein können.

Die Figur 9 zeigt, wie der Sensor 30 zusammengebaut werden kann. Dabei kann das Kragenelement 31c des Deformationsbereiches 31 und das Kranzelement 34c des Befestigungsbereiches 34 komplementär zu einander ausgebildet sein und bspw. korrespondierende Rastelemente aufweisen, um den Deformationsbereich 31 mit dem Befestigungsbereich 34 form- und/oder kraftschlüssig zu befestigen. Unterhalb des Deformationsbereiches 31 ist die Ausnehmung 31b für das Aktivierungsmittel 32 und am Befestigungsbereich 34 ist die Ausnehmung 34b für den Detektionsbereich 33 ausgebildet. In der Ausnehmung 31b am Deformationsbereich 31 sind Befestigungsmittel bzw. Stößel 31.3 vorgesehen, wobei ein Befestigungsmittel bzw. Stößel 31.3 für jedes LDC-Sensorelement 33b vorgesehen ist. Jedes Befestigungsmittel bzw. Stößel 31.3 kann mit einem separaten Aktivierungsmittel 32, bspw. in Form einer Metallfolie ausgeführt werden. Wenn der Deformationsbereich 31 mit dem Befestigungsbereich 34 befestigt ist, liegen das Aktivierungsmittel 32 und der Detektionsbereich 33 geschützt vor äußeren Einflüssen im Inneren des Sensors 30. Dabei ist es denkbar, dass der Deformationsbereich 31 und der Befestigungsbereich 34 aus Kunststoff ausgebildet sein können, bspw. aus Plastik.

Wie oben in der Figur 9 gezeigt ist, kann in der Ausnehmung 31b, seitlich und angrenzend an das Kragenelement 31c eine Verjüngung 31d vorgesehen sein, die in Form einer Rille bzw. Einkerbung umfangsseitig in der Ausnehmung 31b ausgebildet sein kann. Durch die Verjüngung 31d kann ein elastisches, nachgiebiges Verformen des Deformationsbereiches 31 ermöglicht werden. Die elastische Verformung des Deformationsbereiches 31 kann bewirken, dass das Aktivierungselement 32 relativ zum Detektionsbereich 33 bewegt werden kann. Somit kann das Aktivierungsmittel 32 ein induktives Signal erzeugen, welches im Detektionsbereich 33 erfasst werden kann.

Wie in der Mitte und unten in der Figur 9 gezeigt ist, kann in der Ausnehmung 31b, seitlich und angrenzend an das Kragenelement 31c ein Faltelement 31d vorgesehen sein, das als eine dünnwandige Membran in Form eines Faltenbalges ausgebildet sein kann. Das Faltelement 31d kann mit dem Deformationsbereich 31 in einem Spritzgussverfahren hergestellt werden, wie es in der Mitte der Figur 9 gezeigt ist. Ferner ist es denkbar, dass das Faltelement 31d und der Deformationsbereich 31 als ein 2K-Bauteil ausgebildet sein können. Dabei ist es denkbar, dass das Faltelement 31d aus einem elastischen Material, bspw. Kunststoff, vorzugsweise mit einer niedrigeren Viskosität als das Material des Deformationsbereiches 31 ausgebildet sein kann. Mit Hilfe des Faltelementes 31d kann eine Verformung des Deformationsbereiches 31 ermöglicht werden, derart, dass das Aktivierungselement 32 relativ zum Detektionsbereich 33 bewegt werden kann.

Die Figur 10 zeigt, dass an einer Außenseite 31.1 des Deformationsbereiches 31 ein Anzeigeelement 31a vorgesehen sein kann, welches bspw. in Form eines Reliefs einen Herstellernamen und/oder ein Herstelleremblem angeben kann. Grundsätzlich sind verschiedene optische und/oder haptische Anzeigeelemente 31a denkbar, die unterschiedliche Informationen für den Benutzer, bspw. bzgl. der richtigen Benutzung des Sensors 30, anzeigen können. Weiterhin ist es denkbar, dass am Sensorelement 30 ein nicht dargestelltes Beleuchtungselement vorgesehen sein kann, um das Anzeigeelement 31a zu beleuchten. Gleichwohl ist es denkbar, dass in der Nähe des Betätigungsbereiches 50 ein Beleuchtungselement vorgesehen sein kann, um den Betätigungsbereich 50 auch in der Dunkelheit erkennbar zu machen.

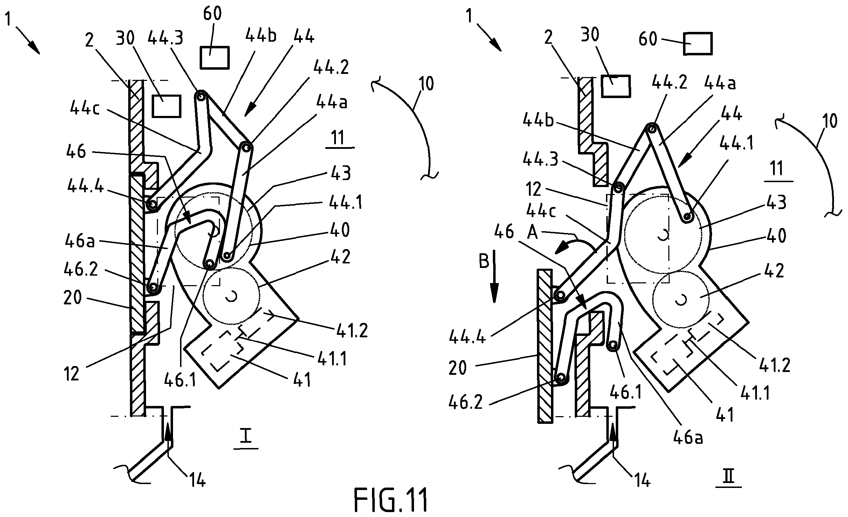

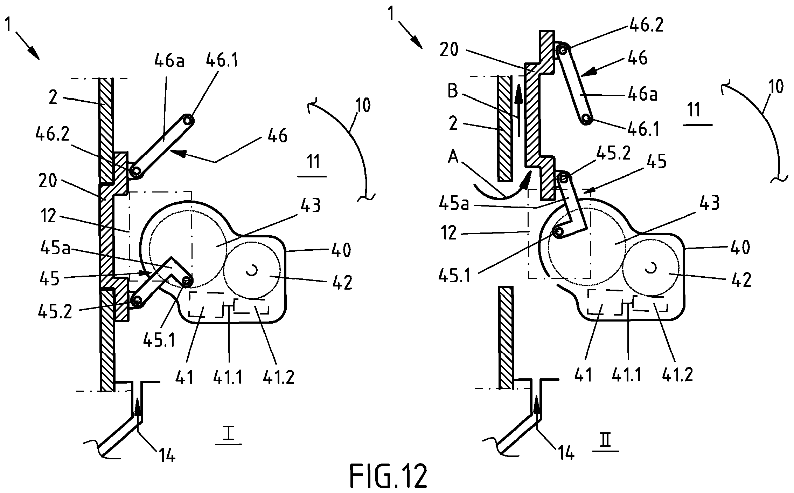

Die Figuren 11 und 12 zeigen jeweils eine mögliche Antriebsvorrichtung 40 für das Schutzelement 20. Die Antriebsvorrichtung 40 weist dabei einen Motor 41 und eine Antriebswelle 41.1 mit einer Schnecke 41.2 auf. Zudem umfasst die Antriebsvorrichtung 40 ein Getriebe 42, 43, welches die Antriebswirkung vom Motor 41 an das Schutzelement 20 überträgt. An die Schnecke 41.2 ist dabei ein Schneckenrad 42 drehbar gekoppelt und an das Schneckenrad 42 ein Zahnrad 43. Somit kann ein selbsthemmendes Getriebe 42, 43 bereitgestellt werden, um das Schutzelement 20 insbesondere in der Betriebsstellung II vor Manipulationen zu schützen. Durch eine geeignete Wahl der Durchmesser des Schneckenrades 42 und des Zahnrades 43 kann eine Übersetzung, insbesondere eine Untersetzung, bereitgestellt werden, um das Schutzelement 20 über einen relativ kurzen Arbeitsweg stabil anzutreiben.

Gemäß einer Ausführungsform der Figur 11 kann die Antriebsvorrichtung 40 einen Hebelmechanismus 44 aufweisen, um die Antriebswirkung auf das Schutzelement 20 zu übertragen. Der Hebelmechanismus 44 kann als ein Viergelenk-Hebelmechanismus 44 ausgebildet sein. Der Viergelenk-Hebelmechanismus 44 weist drei Hebel 44a, 44b, 44c und vier Gelenke 44.1, 44.2, 44.3, 44.4 als drehbare Achsen auf. Somit kann eine relativ bündige Überführung des Schutzelementes 20 aus der Ruhestellung I in die Betriebsstellung II ermöglicht werden, wobei das Schutzelement 20 in jeder Stellung I, II zwischen der Ruhestellung I und der Betriebsstellung II relativ nahe bzw. bündig zur Fahrzeugaußenhaut 2 angeordnet ist, ohne jedoch die Fahrzeugaußenhaut 2 unmittelbar zu kontaktieren. Somit kann das Schutzelement 20 auch bei der Überführung zwischen der Ruhestellung I und der Betriebsstellung II vor Manipulationen geschützt werden.

Der Viergelenk-Hebelmechanismus 44 gemäß der Figur 11 ermöglicht außerdem, dass das Schutzelement 20 bei der Bewegung zwischen der Ruhestellung I und der Betriebsstellung II in einer ersten Bewegungsphase A drehbar nach außen bezüglich der Aufnahme 11 im Gehäuse 10 und einer zweiten Bewegungsphase B im Wesentlichen parallel zur Fahrzeugaußenhaut 2 verfahrbar sein kann. Durch die erste Bewegungsphase A kann der Vorteil erreicht werden, dass die Größe des Tankmoduls 1 reduziert werden kann. Durch die zweite Bewegungsphase B kann der Vorteil erreicht werden, dass das Schutzelement 20 im Wesentlichen parallel zur Fahrzeugaußenhaut 2 verfahren kann, ohne gefährlich weit von der Fahrzeugaußenhaut 2 abzustehen.

Gemäß einer Ausführungsform der Figur 12 kann die Antriebsvorrichtung 40 einen Hebelmechanismus 45 aufweisen, der eine Kurbel 45a aufweisen kann, die drehbar mit dem Schutzelement 20 verbunden sein kann, um das Schutzelement 20 anzutreiben. Somit kann ein einfacher Hebelmechanismus 45 für das Schutzelement 20 bereitgestellt werden. Die Kurbel 45a ist dabei mit Hilfe einer drehfesten Verbindung 45.1 zum Zahnrad 43 als ein festes Gelenk 45.1 verbunden. Ein anderes Ende der Kurbel ist drehbar über ein Gelenk 45.2 mit dem Schutzelement 20 verbunden. Dabei kann der Hebelmechanismus 45 derart ausgeführt sein, dass das Schutzelement 20 bei der Bewegung zwischen der Ruhestellung I und der Betriebsstellung II in einer ersten Bewegungsphase A drehbar nach innen in die Aufnahme 11 im Gehäuse 10 und in einer zweiten Bewegungsphase B im Wesentlichen parallel zur Fahrzeugaußenhaut 2 innerhalb der Aufnahme 11 verfahrbar sein kann. Dadurch kann der Vorteil erreicht werden, dass das Schutzelement 20 in der Betriebsstellung II unzugänglich von außen, geschützt im Inneren der Aufnahme 11 hinter der Fahrzeugaußenhaut 2 angeordnet sein kann.

Ferner zeigen die Figuren 11 und 12 einen zweiten Hebelmechanismus 46, der dazu ausgelegt ist, die Bewegung des Schutzelementes 20 zu stabilisieren. Dabei weist der zweite Hebelmechanismus 46 einen schwenkbar am Gehäuse 10 gelagerten Hebel 46a auf, der drehbar mit dem Schutzelement 20 verbunden ist. Dabei weist der zweite Hebelmechanismus 46 zwei Gelenke 46.1, 46.2 als drehbare Achsen auf, um das Schutzelement 20 schwenkbar am Gehäuse 10 und drehbar mit dem Schutzelement 20 zu verbinden. Der Hebel 46a kann die Bewegung des Schutzelementes 20 zumindest zum Teil bestimmen und vorteilhafterweise verhindern, dass das Schutzelement 20 bei der Bewegung zwischen der Ruhestellung I und der Betriebsstellung II gefährlich weit von der Fahrzeugaußenhaut 2 entfernt wird.

In der Ausführungsform der Figur 11 kann der Hebel 46a als ein bogenförmiger Hebel 46a ausgebildet sein, um eine Bewegung des Schutzelementes 20 um eine Kante des Gehäuses 10 am Rande der Aufnahme 11 zu ermöglichen, ohne mit der Kante zu kollidieren.

Des Weiteren zeigen die Figuren 11 und 12, dass im Gehäuse 10 ein Ablauf 14 vorgesehen sein kann, um Feuchtigkeit, bspw. Regenwasser, aus der Aufnahme 11 des Gehäuses 10 abzuleiten. Der Ablauf 14 kann dabei nach außen führen.

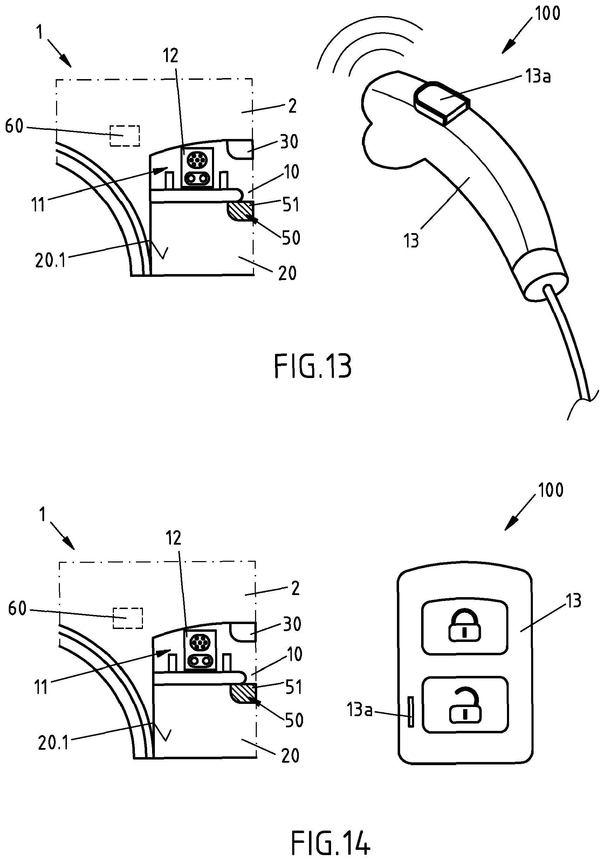

Die Figuren 13 und 14 zeigen das erfindungsgemäße System 100 jeweils in einer möglichen Ausführungsform. Das System 100 weist dabei ein Tankmodul 1 auf, welches gemäß einem der oben beschriebenen Ausführungsbeispiele ausgeführt werden kann. Weiterhin weist das System 100 ein mobiles Bauteil 13 auf, welches mit einem Aktivierungselement 13a ausgebildet ist. Das Aktivierungselement 13a kann dabei entweder mit dem Sensor 30 oder mit dem weiteren Sensor 60 zusammenwirken, um das Schutzelement 20 berührungslos anzutreiben oder eine weitere Funktion einzuleiten, wie z. B. eine bargeldlose Bezahlung und/oder eine ID-Abfrage.

Das erfindungsgemäße System 100 stellt ein intelligentes, interaktives System 100 mit einem Tankmodul 1 und einem mobilen Bauteil 13 dar. Als ein mobiles Bauteil 13 sind ein Ladestecker 13 (s. die Figur 13) für das Anschlusselement 12 und/oder ein ID-Geber 13 (s. die Figur 14) denkbar. Zudem ist es denkbar, dass am Tankmodul 1 jeweils ein weiterer Sensor 60 für ein Aktivierungselement 13a am Ladestecker 13 und ein Aktivierungselement 13a am ID-Geber 13 vorgesehen sein kann, wobei der Sensor 30 nur zum Betätigen des Schutzelementes 20 vorgesehen sein kann. Dennoch ist es denkbar, dass das Aktivierungselement 13a am Ladestecker 13 und/oder das Aktivierungselement 13a am ID-Geber mit dem Sensor 30 zusammenwirken können, bspw. auf eine berührungslose Weise.

Gemäß der Figur 13 ist es ferner denkbar, dass das Aktivierungselement 13a am Ladestecker 13 als ein NFC-Tag ausgebildet sein kann. Der NFC-Tag kann über eine Reichweite von 0 bis 5 cm, bevorzugt eine Reichweite von 0 bis 2 cm, oder besonders sicher berührungsbehaftet mit dem Sensor 30 oder dem weiteren Sensor 60 zusammenwirken. Über den NFC-Tag können Bezahlvorgänge eingeleitet werden. Dabei kann der NFC-Tag sowohl als ein aktiver als auch als ein passiver Transponder ausgebildet sein. Hierzu kann der Sensor 30, 60 als ein aktiver und/oder passiver Transponder ausgebildet sein.

### Bezuaszeichenliste

- 1: Tankmodul
- 2: Fahrzeugaußenhaut

- 10: Gehäuse
- 11: Aufnahme
- 12: Anschlusselement / Ladesteckdose
- 13: mobiles Bauteil / Ladestecker / ID-Geber
- 13a: Aktivierungselement / Sensorelement / Antenne
- 14: Ablauf

- 20: Schutzelement
- 20.1: Außenfläche
- 21: Lagerstelle
- 22: Lagerstelle

- 30: Sensor
- 31: Deformationsbereich / Kappe
- 31.1: Außenseite
- 31.2: Innenseite
- 31.3: Befestigungsmittel / Stößel
- 31a: Anzeigeelement / Emblem
- 31b: Ausnehmung
- 31c: Kragenelement
- 31d: Faltelement / Verjüngung
- 32: Aktivierungsmittel
- 33: Detektionsbereich
- 33a: Platine / kapazitive Fläche
- 33b: LDC-Sensorelemente
- 33c: Detektionspunkt
- 33d: kapazitive Fläche
- 34: Befestigungsbereich
- 34a: Befestigungslasche
- 34b: Ausnehmung
- 34c: Kranzelement

- 40: Antriebsvorrichtung
- 41: Motor
- 41.1: Antriebswelle
- 41.2: Schnecke
- 42, 43: Getriebe
- 42: Schneckenrad
- 43: Zahnrad
- 44: Hebelmechanismus
- 44.1: Gelenk
- 44.2: Gelenk
- 44.3: Gelenk
- 44.4: Gelenk
- 44a: Hebel
- 44b: Hebel
- 44c: Hebel
- 45: Hebelmechanismus
- 45.1: Gelenk
- 45.2: Gelenk
- 45a: Hebel
- 46: zweiter Hebelmechanismus
- 46.1: Gelenk
- 46.2: Gelenk
- 46a: Hebel

- 50: Betätigungsbereich / Aussparung / elastisch verformbarer Bereich
- 51: Erkennung
- 60: zweiter Sensor

- A: erste Bewegungsphase
- B: zweite Bewegungsphase

- D1: Druck
- D2: Druck
- D3: Druck

- K: kapazitives Feld
- M: Mitte

- I: Ruhestellung
- II: Betriebsstellung

## Patentansprüche

1. Tankmodul (1) für ein Kraftfahrzeug, mit
einem Gehäuse (10), in welchem eine Aufnahme (11) vorgesehen ist,
wobei in der Aufnahme (11) ein Anschlusselement (12) in Form einer Ladesteckdose (12) angeordnet ist,
einem Schutzelement (20) für das Anschlusselement (12), welches zwischen zumindest zwei Stellungen (I, II) bewegbar ist, nämlich:
einer Ruhestellung (I), in welcher die Aufnahme (11) durch das Schutzelement (20) verschließbar ist, und
einer Betriebsstellung (II), in welcher die Aufnahme (11) durch das Schutzelement (20) freigebbar ist, sodass das Anschlusselement (12) freigelegt ist,
wobei das Schutzelement (20) eine Außenfläche (20.1) aufweist,
und mindestens einem Sensor (30) zum Erfassen einer Aktivierungshandlung eines Benutzers, um das Schutzelement (20) zwischen der Ruhestellung (I) und der Betriebsstellung (II) zu überführen,
wobei das Schutzelement (20) derart gelagert ist, dass die Außenfläche (20.1) des Schutzelementes (20) in der Ruhestellung (I) und die Außenfläche des Schutzelementes (20) in der Betriebsstellung (II) parallel zu einander ausgerichtet sind, **dadurch gekennzeichnet, dass** der Sensor (30) einen Deformationsbereich (31) aufweist, an welchem die Aktivierungshandlung des Benutzers durch Verformen des Deformationsbereiches (31) erfassbar ist, dass der Sensor (30) mindestens ein induktives, elastisch verformbares Aktivierungsmittel (32) aufweist, und dass das mindestens eine Aktivierungsmittel (32) als eine elektrisch leitende Folie, Beschichtung oder Element aus Metall ausgebildet ist.

2. Tankmodul (1) nach Anspruch 1,
**dadurch gekennzeichnet,**
**dass** ein Betätigungsbereich (50) vorgesehen ist, in welchem die Aktivierungshandlung des Benutzers am Schutzelement (20) und/oder an einer Fahrzeugaußenhaut (2) erfassbar ist,
wobei insbesondere der Betätigungsbereich (50) eine Erkennung (51), vorzugsweise in Form einer Strukturierung und/oder eine Markierung, aufweist, um den Betätigungsbereich (50) optisch und/oder haptisch für den Benutzer erkennbar zu machen.

3. Tankmodul (1) nach Anspruch 2,
**dadurch gekennzeichnet,**
**dass** der Betätigungsbereich (50) in Form einer Aussparung (50) im Schutzelement (20) oder in einer Fahrzeugaußenhaut (2) oder dass der Betätigungsbereich (50) aus Kunststoff ausbildbar ist,
wobei insbesondere der Sensor (30) als ein optischer Sensor, ein kapazitiver Sensor, ein Drucksensor, ein induktiver Sensor oder ein NFC-Sensor ausgebildet ist.

4. Tankmodul (1) nach Anspruch 2,
**dadurch gekennzeichnet,**
**dass** der Betätigungsbereich (50) in Form eines elastisch verformbaren Bereichs (50) im Schutzelement (20) oder in einer Fahrzeugaußenhaut (2) ausgebildet ist,
wobei insbesondere der Sensor (30) als ein Drucksensor ausgebildet ist und/oder mindestens ein LDC-Sensorelement (33b) aufweist.

5. Tankmodul (1) nach einem der vorhergehenden Ansprüche,
**dadurch gekennzeichnet,**
**dass** der Deformationsbereich (31) in Form einer Kappe (31) ausgebildet ist,
wobei insbesondere der Deformationsbereich (31) am Betätigungsbereich (50) und/oder an mindestens einer Lagerstelle (21, 22) des Schutzelementes (20) angeordnet ist.

6. Tankmodul (1) nach einem der vorhergehenden Ansprüche,
**dadurch gekennzeichnet,**
**dass** der Deformationsbereich (31) an einer dem Betätigungsbereich (50) zugewandten Außenseite (31.1) des Deformationsbereiches (31) ein optisches und/oder haptisches Anzeigeelement (31a) aufweist,
wobei vorzugsweise an einer dem Betätigungsbereich (50) zugewandten Außenseite (31.1) des Deformationsbereiches (31) ein umfangsseitig umlaufendes Faltelement (31d) ausgebildet ist, um eine Verformung des Deformationsbereiches (31) zu ermöglichen,
wobei bevorzugt das Faltelement (31d) aus einem elastischen Material, bspw. Kunststoff, vorzugsweise mit einer niedrigeren Viskosität als das Material des Deformationsbereiches (31) ausgebildet ist.

7. Tankmodul (1) nach einem der vorhergehenden Ansprüche,
**dadurch gekennzeichnet,**
**dass** das mindestens eine Aktivierungsmittel (32) vollständig galvanisch getrennt ausgebildet ist.

8. Tankmodul (1) nach einem der vorhergehenden Ansprüche,
**dadurch gekennzeichnet,**
**dass** der Deformationsbereich (31) an einer dem Betätigungsbereich (50) abgewandten Innenseite (31.2) eine Ausnehmung (31b) für das mindestens eine Aktivierungsmittel (32) aufweist,
wobei insbesondere die Ausnehmung (31b) von einem Kragenelement (31c) umrandet ist,
wobei bevorzugt in der Ausnehmung (31b) eine umfangsseitig umlaufende, insbesondere an das Kragenelement (31c) angrenzende, Verjüngung (31d) vorgesehen ist, um eine Verformung des Deformationsbereiches (31) zu ermöglichen.

9. Tankmodul (1) nach einem der vorhergehenden Ansprüche,
**dadurch gekennzeichnet,**
**dass** der Sensor (30) einen Detektionsbereich (33) aufweist, in welchem eine Verformung des Betätigungsbereiches (50) und/oder des Deformationsbereiches (31), vorzugsweise durch eine Induktivitätsmessung, erfassbar ist.

10. Tankmodul (1) nach einem der vorhergehenden Ansprüche,
**dadurch gekennzeichnet,**
**dass** der Detektionsbereich (33) mindestens eine Platine (33a) und/oder mindestens ein, vorzugsweise mehrere, LDC-Sensorelemente (33b) umfasst,
wobei insbesondere mehrere LDC- Sensorelemente (33b) derart symmetrisch um einen Detektionspunkt (33c) angeordnet sind, dass eine Verformung des Betätigungsbereiches (50) und/oder des Deformationsbereiches (31) nur im Detektionspunkt (33c) erfassbar ist, wobei bevorzugt der Detektionsbereich (33) eine kapazitive Fläche (33d) aufweist.

11. Tankmodul (1) nach einem der vorhergehenden Ansprüche,
**dadurch gekennzeichnet,**
**dass** ein weiterer Sensor (60) vorgesehen ist,
wobei insbesondere der weitere Sensor (60) als ein optischer Sensor, ein kapazitiver Sensor, ein Drucksensor, ein induktiver Sensor oder ein NFC-Sensor ausgebildet ist oder mindestens ein LDC-Sensorelement umfasst.

12. Tankmodul (1) nach einem der vorhergehenden Ansprüche
**dadurch gekennzeichnet,**
**dass** im Gehäuse (10) ein Ablauf (14) vorgesehen ist, um Feuchtigkeit, bspw. Regenwasser, aus der Aufnahme (11) des Gehäuses (10) abzuleiten.

13. System (100) mit einem Tankmodul (1) für ein Kraftfahrzeug nach einem der vorhergehenden Ansprüche, wobei das Tankmodul (1) mit
einem Gehäuse (10), in welchem eine Aufnahme (11) vorgesehen ist,
wobei in der Aufnahme (11) ein Anschlusselement (12) in Form einer Ladesteckdose (12) angeordnet ist,
einem Schutzelement (20) für das Anschlusselement (12), welches zwischen zumindest zwei Stellungen (I, II) bewegbar ist, nämlich:
einer Ruhestellung (I), in welcher die Aufnahme (11) durch das Schutzelement (20) verschließbar ist, und
einer Betriebsstellung (II), in welcher die Aufnahme (11) durch das Schutzelement (20) freigebbar ist, sodass das Anschlusselement (12) freigelegt ist,
und mindestens einem Sensor (30) zum Erfassen einer Aktivierungshandlung eines Benutzers, um das Schutzelement (20) zwischen der Ruhestellung (I) und der Betriebsstellung (II) zu überführen, ausgeführt ist,
und einem mobilen Bauteil (13),
wobei das mobile Bauteil (13) ein Aktivierungselement (13a) aufweist, welches mit dem Sensor (30) und/oder einem weiteren Sensor (60) zusammenwirkt, um das Schutzelement (20) berührungslos anzutreiben oder eine Funktion einzuleiten.

14. System (100) nach Anspruch 13,
**dadurch gekennzeichnet,**
**dass** das mobile Bauteil (13) ein Ladestecker (13) und/oder ein ID-Geber (13) ist,
wobei insbesondere der Ladestecker (13) einen NFC-Tag als Aktivierungselement (13a) aufweist, bevorzugt mit einer Reichweite von 0 bis 5 cm, besonders bevorzugt mit einer Reichweite von 0 bis 2 cm, vorzugsweise berührungsbehaftet mit dem Sensor (30) und/oder einem weiteren Sensor (60).

15. Verfahren zum Betätigen eines Tankmoduls (1) für ein Kraftfahrzeug nach einem der vorhergehenden Ansprüche, mit
einem Gehäuse (10), in welchem eine Aufnahme (11) vorgesehen ist,
wobei in der Aufnahme (11) ein Anschlusselement (12) in Form einer Ladesteckdose (12) angeordnet ist,
einem Schutzelement (20) für das Anschlusselement (12), welches zwischen zumindest zwei Stellungen (I, II) bewegbar ist, nämlich:
einer Ruhestellung (I), in welcher die Aufnahme (11) durch das Schutzelement (20) verschließbar ist, und
einer Betriebsstellung (II), in welcher die Aufnahme (11) durch das Schutzelement (20) freigebbar ist, sodass das Anschlusselement (12) freigelegt ist,
wobei das Schutzelement (20) eine Außenfläche (20.1) aufweist,
und mindestens einem Sensor (30) zum Erfassen einer Aktivierungshandlung eines Benutzers, um das Schutzelement (20) zwischen der Ruhestellung (I) und der Betriebsstellung (II) zu überführen,
**dadurch gekennzeichnet,**
**dass** das Schutzelement (20) derart angetrieben wird, dass die Außenfläche (20.1) des Schutzelementes (20) in der Ruhestellung (I) und die Außenfläche (20.1) des Schutzelementes (20) in der Betriebsstellung (II) parallel zu einander ausgerichtet werden.

## Claims

1. Tank module (1) for a motor vehicle, with
a housing (10) in which a receptacle (11) is provided,
wherein a connection element (12) in the form of a charging socket (12) is arranged in the receptacle (11),
a protective element (20) for the connection element (12), which is movable between at least two positions (I, II), namely:
a rest position (I), in which the receptacle (11) can be closed by the protective element (20), and
an operating position (II) in which the receptacle (11) can be released by the protective element (20) so that the connecting element (12) is exposed,
wherein the protective element (20) has an outer surface (20.1),
and at least one sensor (30) for detecting an activation action of a user to transfer the protective element (20) between the rest position (I) and the operating position (II),
wherein the protective element (20) is mounted such that the outer surface (20.1) of the protective element (20) in the rest position (I) and the outer surface (20.1) of the protective element (20) in the operating position (II) are aligned parallel to each other,
**characterized in that**
the sensor (30) has a deformation area (31) at which the activation action of the user can be detected by deforming the deformation area (31),
**in that** the sensor (30) has at least one inductive, elastically deformable activation means (32),
and **in that** the at least one activating means (32) is formed as an electrically conductive foil, coating or element made of metal.

2. Tank module (1) according to claim 1,
**characterized in that**
an actuation area (50) is provided in which the activation action of the user can be detected on the protective element (20) and/or on a vehicle outer skin (2),
wherein in particular the actuation area (50) has a recognition (51), preferably in the form of a structuring and/or a marking, in order to make the actuation area (50) visually and/or haptically recognizable for the user.

3. Tank module (1) according to claim 2,
**characterized in that**
the actuating region (50) is in the form of a recess (50) in the protective element (20) or in a vehicle outer skin (2), or **in that** the actuating region (50) can be formed from plastic, wherein in particular the sensor (30) is designed as an optical sensor, a capacitive sensor, a pressure sensor, an inductive sensor or an NFC sensor.

4. Tank module (1) according to claim 2,
**characterized in that**
the actuating region (50) is formed in the form of an elastically deformable region (50) in the protective element (20) or in a vehicle outer skin (2),
wherein in particular the sensor (30) is designed as a pressure sensor and/or comprises at least one LDC sensor element (33b).

5. Tank module (1) according to any of the preceding claims,
**characterized in that**
the deformation area (31) is in the form of a cap (31),
wherein in particular the deformation area (31) is arranged at the actuating region (50) and/or at at least one bearing point (21, 22) of the protective element (20).

6. Tank module (1) according to any of the preceding claims,
**characterized in that**
the deformation area (31) has an optical and/or haptic display element (31a) on an outer side (31.1) of the deformation area (31) facing the actuation region (50),
wherein a circumferential folding element (31d) is preferably formed on an outer side (31.1) of the deformation area (31) facing the actuating region (50) in order to enable deformation of the deformation area (31),
wherein preferably the folding element (31d) is formed of an elastic material, e.g. plastic, preferably with a lower viscosity than the material of the deformation area (31).

7. Tank module (1) according to any of the preceding claims,
**characterized in that**
the at least one activation means (32) is designed to be completely electrically isolated.

8. Tank module (1) according to any of the preceding claims,
**characterized in that**
the deformation area (31) has a recess (31b) for the at least one activation means (32) on an inner side (31.2) facing away from the actuation region (50),
wherein in particular the recess (31b) is bordered by a collar element (31c),
wherein a circumferential taper (31d), in particular adjacent to the collar element (31c), is preferably provided in the recess (31b) to allow deformation of the deformation area (31).

9. Tank module (1) according to any of the preceding claims,
**characterized in that**
the sensor (30) has a detection area (33) in which a deformation of the actuation area (50) and/or of the deformation area (31) can be detected, preferably by an inductance measurement.

10. Tank module (1) according to any of the preceding claims,
**characterized in that**
the detection area (33) comprises at least one circuit board (33a) and/or at least one, preferably several, LDC sensor elements (33b),
wherein in particular several LDC sensor elements (33b) are arranged symmetrically around a detection point (33c) in such a way that a deformation of the actuation area (50) and/or of the deformation area (31) can only be detected in the detection point (33c), wherein preferably the detection area (33) has a capacitive area (33d).

11. Tank module (1) according to any of the preceding claims,
**characterized in that**
a further sensor (60) is provided,
wherein in particular the further sensor (60) is formed as an optical sensor, a capacitive sensor, a pressure sensor, an inductive sensor or an NFC sensor or comprises at least one LDC sensor element.

12. Tank module (1) according to any one of the preceding claims
**characterized in that**
a drain (14) is provided in the housing (10) in order to drain off moisture, for example rainwater, from the receptacle (11) of the housing (10).

13. System (100) comprising a tank module (1) for a motor vehicle according to any one of
the preceding claims, wherein the tank module (1) is equipped with
a housing (10) in which a receptacle (11) is provided,
wherein a connection element (12) in the form of a charging socket (12) is arranged in the receptacle (11),
a protective element (20) for the connection element (12), which is movable between at least two positions (I, II), namely:
a rest position (I), in which the receptacle (11) can be closed by the protective element (20), and
an operating position (II) in which the receptacle (11) can be released by the protective element (20) so that the connecting element (12) is exposed,
and at least one sensor (30) for detecting an activation action of a user in order to transfer the protective element (20) between the rest position (I) and the operating position (II), and a mobile component (13),
wherein the mobile component (13) comprises an activation element (13a) which cooperates with the sensor (30) and/or a further sensor (60) to drive the protective element (20) without contact or to initiate a function.

14. System (100) according to claim 13,
**characterized in that**
the mobile component (13) is a charging plug (13) and/or an ID transponder (13),
wherein in particular the charging plug (13) has an NFC tag as activation element (13a), preferably with a range of 0 to 5 cm, particularly preferably with a range of 0 to 2 cm, preferably in contact with the sensor (30) and/or a further sensor (60).

15. Method for actuating a tank module (1) for a motor vehicle according to any one of the preceding claims, with
a housing (10) in which a receptacle (11) is provided,
wherein a connection element (12) in the form of a charging socket (12) is arranged in the receptacle (11),
a protective element (20) for the connection element (12), which is movable between at least two positions (I, II), namely:
a rest position (I), in which the receptacle (11) can be closed by the protective element (20), and
an operating position (II) in which the receptacle (11) can be released by the protective element (20) so that the connecting element (12) is exposed,
wherein the protective element (20) has an outer surface (20.1),
and at least one sensor (30) for detecting an activation action of a user to transfer the protective element (20) between the rest position (I) and the operating position (II),
**characterized in that**
the protective element (20) is driven in such a way that the outer surface (20.1) of the protective element (20) in the rest position (I) and the outer surface (20.1) of the protective element (20) in the operating position (II) are aligned parallel to each other.

## Revendications

1. Module de réservoir (1) pour un véhicule automobile, comprenant
un boîtier (10) dans lequel est prévu un logement (11),
un élément de raccordement (12) sous la forme d'une prise de charge (12) étant disposé dans le logement (11),
un élément de protection (20) pour l'élément de raccordement (12), qui est mobile entre au moins deux positions (I, II), à savoir :
une position de repos (I), dans laquelle le logement (11) peut être fermé par l'élément de protection (20), et
une position de fonctionnement (II), dans laquelle le logement (11) peut être libéré par l'élément de protection (20), de sorte que l'élément de raccordement (12) est dégagé,
l'élément de protection (20) présentant une surface extérieure (20.1),
et au moins un capteur (30) pour détecter une action d'activation d'un utilisateur afin de transférer l'élément de protection (20) entre la position de repos (I) et la position de fonctionnement (II),
l'élément de protection (20) étant monté de telle sorte que la surface extérieure (20.1) de l'élément de protection (20) dans la position de repos (I) et la surface extérieure (20.1) de l'élément de protection (20) dans la position de fonctionnement (II) sont orientées parallèlement l'une à l'autre,
**caractérisé en ce que**
le capteur (30) présente une zone de déformation (31) au niveau de laquelle l'action d'activation de l'utilisateur peut être détectée par déformation de la zone de déformation (31),
**en ce que** le capteur (30) présente au moins un moyen d'activation (32) inductif, élastiquement déformable,
et **en ce que** le au moins un moyen d'activation (32) est réalisé sous la forme d'une feuille, d'un revêtement ou d'un élément électriquement conducteur en métal.

2. Module de réservoir (1) selon la revendication 1,
**caractérisé en ce qu'**
il est prévu une zone d'actionnement (50) dans laquelle l'action d'activation de l'utilisateur peut être détectée sur l'élément de protection (20) et/ou sur une peau extérieure (2) du véhicule,
dans lequel, en particulier, la zone d'actionnement (50) présente une reconnaissance (51), de préférence sous la forme d'une structuration et/ou d'un marquage, afin de rendre la zone d'actionnement (50) reconnaissable optiquement et/ou haptiquement pour l'utilisateur.

3. Module de réservoir (1) selon la revendication 2,
**caractérisé en ce que**
la zone d'actionnement (50) se présente sous la forme d'un évidement (50) dans l'élément de protection (20) ou dans une peau extérieure de véhicule (2) ou **en ce que** la zone d'actionnement (50) peut être réalisée en matière plastique,
dans lequel, en particulier, le capteur (30) est conçu comme un capteur optique, un capteur capacitif, un capteur de pression, un capteur inductif ou un capteur NFC.

4. Module de réservoir (1) selon la revendication 2,
**caractérisé en ce que**
la zone d'actionnement (50) est réalisée sous la forme d'une zone élastiquement déformable (50) dans l'élément de protection (20) ou dans une peau extérieure de véhicule (2),
le capteur (30) étant notamment conçu comme un capteur de pression et/ou présentant au moins un élément de capteur LDC (33b).

5. Module de réservoir (1) selon l'une des revendications précédentes,
**caractérisé en ce que**
la zone de déformation (31) est réalisée sous la forme d'un capuchon (31),
la zone de déformation (31) étant notamment disposée sur la zone d'actionnement (50) et/ou sur au moins un point d'appui (21, 22) de l'élément de protection (20).

6. Module de réservoir (1) selon l'une des revendications précédentes,
**caractérisé en ce que**
la zone de déformation (31) présente, sur un côté extérieur (31.1) de la zone de déformation (31) tourné vers la zone d'actionnement (50), un élément d'affichage optique et/ou haptique (31a),
un élément de pliage (31d) périphérique étant de préférence formé sur un côté extérieur (31.1) de la zone de déformation (31), tourné vers la zone d'actionnement (50), afin de permettre une déformation de la zone de déformation (31),
de préférence l'élément de pliage (31d) étant réalisé en un matériau élastique, par exemple en matière plastique, de préférence avec une viscosité plus faible que le matériau de la zone de déformation (31).

7. Module de réservoir (1) selon l'une des revendications précédentes,
**caractérisé en ce que**
le au moins un moyen d'activation (32) est réalisé de manière complètement séparée galvaniquement.

8. Module de réservoir (1) selon l'une des revendications précédentes,
**caractérisé en ce que**
la zone de déformation (31) présente, sur une face intérieure (31.2) opposée à la zone d'actionnement (50), un évidement (31b) pour le au moins un moyen d'activation (32), dans lequel, en particulier, l'évidement (31b) est bordé par un élément de collerette (31c), un rétrécissement (31d) périphérique, en particulier adjacent à l'élément de collerette (31c), étant de préférence prévu dans l'évidement (31b) pour permettre une déformation de la zone de déformation (31).

9. Module de réservoir (1) selon l'une des revendications précédentes,
**caractérisé en ce que**
le capteur (30) présente une zone de détection (33) dans laquelle une déformation de la zone d'actionnement (50) et/ou de la zone de déformation (31) peut être détectée, de préférence par une mesure d'inductance.

10. Module de réservoir (1) selon l'une des revendications précédentes,
**caractérisé en ce que**
la zone de détection (33) comprend au moins une platine (33a) et/ou au moins un, de préférence plusieurs, éléments de détection LDC (33b),
plusieurs éléments de détection LDC (33b) étant notamment disposés de manière symétrique autour d'un point de détection (33c) de telle sorte qu'une déformation de la zone d'actionnement (50) et/ou de la zone de déformation (31) ne peut être détectée qu'au point de détection (33c),
dans lequel, de préférence, la zone de détection (33) présente une surface capacitive (33d).

11. Module de réservoir (1) selon l'une des revendications précédentes,
**caractérisé en ce qu'**
un autre capteur (60) est prévu,
dans lequel, en particulier, l'autre capteur (60) est conçu comme un capteur optique, un capteur capacitif, un capteur de pression, un capteur inductif ou un capteur NFC ou comprend au moins un élément de capteur LDC.

12. Module de réservoir (1) selon l'une des revendications précédentes
**caractérisé en ce qu'**
il est prévu dans le boîtier (10) un écoulement (14) pour évacuer l'humidité, par exemple l'eau de pluie, du logement (11) du boîtier (10),

13. Système (100) comprenant un module de réservoir (1) pour un véhicule automobile selon l'une quelconque des revendications précédentes, dans lequel le module de réservoir (1) est équipé avec
un boîtier (10) dans lequel est prévu un logement (11),
un élément de raccordement (12) sous la forme d'une prise de charge (12) étant disposé dans le logement (11),
un élément de protection (20) pour l'élément de raccordement (12), qui est mobile entre au moins deux positions (I, II), à savoir :
une position de repos (I), dans laquelle le logement (11) peut être fermé par l'élément de protection (20), et
une position de fonctionnement (II), dans laquelle le logement (11) peut être libéré par l'élément de protection (20), de sorte que l'élément de raccordement (12) est dégagé,
et au moins un capteur (30) pour détecter une action d'activation d'un utilisateur afin de faire passer l'élément de protection (20) entre la position de repos (I) et la position de fonctionnement (II),
et un composant mobile (13),
dans lequel le composant mobile (13) présente un élément d'activation (13a) qui coopère avec le capteur (30) et/ou un autre capteur (60) pour entraîner l'élément de protection (20) sans contact ou pour initier une fonction.

14. Système (100) selon la revendication 13,
**caractérisé en ce que**
le composant mobile (13) est un connecteur de charge (13) et/ou un transmetteur ID (13), dans lequel, en particulier, le connecteur de charge (13) présente une étiquette NFC comme élément d'activation (13a), de préférence avec une portée de 0 à 5 cm, de manière particulièrement préférée avec une portée de 0 à 2 cm, de préférence en contact avec le capteur (30) et/ou un autre capteur (60).

15. Procédé d'actionnement d'un module de réservoir (1) pour un véhicule automobile selon
l'une des revendications précédentes, comprenant
un boîtier (10) dans lequel est prévu un logement (11),
un élément de raccordement (12) sous la forme d'une prise de charge (12) étant disposé dans le logement (11),
un élément de protection (20) pour l'élément de raccordement (12), qui est mobile entre au moins deux positions (I, II), à savoir :
une position de repos (I), dans laquelle le logement (11) peut être fermé par l'élément de protection (20), et
une position de fonctionnement (II), dans laquelle le logement (11) peut être libéré par l'élément de protection (20), de sorte que l'élément de raccordement (12) est dégagé,
l'élément de protection (20) présentant une surface extérieure (20.1),
et au moins un capteur (30) pour détecter une action d'activation d'un utilisateur afin de transférer l'élément de protection (20) entre la position de repos (I) et la position de fonctionnement (II),
**caractérisé en ce que**
l'élément de protection (20) est entraîné de telle sorte que la surface extérieure (20.1) de l'élément de protection (20) dans la position de repos (I) et la surface extérieure (20.1) de l'élément de protection (20) dans la position de fonctionnement (II) sont orientées parallèlement l'une à l'autre.
